# EUROPEAN PATENT APPLICATION

(11) **EP 4 297 507 A1**
(43) Date of publication of application: **27.12.2023**
(21) Application number: 22770507.6
(22) Date of filing: 15.03.2022
(51) Int. Cl.: H04W 72/04

(54) **METHOD FOR TRANSMITTING SMALL DATA AND COMMUNICATION APPARATUS**

(30) Priority: 17.03.2021 CN 202110285347; 01.04.2021 CN 202110365064
(71) Applicant: Huawei Technologies Co., Ltd., Shenzhen, Guangdong 518129 (CN)
(72) Inventor: ZHANG, Mengchen, Shenzhen, Guangdong 518129 (CN); KOZIOL, Dawid, Shenzhen, Guangdong 518129 (CN); YOU, Chunhua, Shenzhen, Guangdong 518129 (CN)
(74) Representative: Huawei European IPR
(86) International application number: PCT/CN2022/080964
(87) International publication number: WO 2022/194154

(57) **Abstract**

This application provides a small data transmission method and a communication apparatus. In the method, a terminal device may determine, in an RRC non-connected state based on first duration and a first moment at which first small data needs to be transmitted, a target resource for transmitting the first small data. In this way, the terminal device may send the first small data to a network device based on the target resource, to avoid signaling overheads caused when the terminal device needs to enter an RRC connected state to send the first small data.

## Description

This application claims priority to Chinese Patent Application No. 202110285347.5, filed with the China National Intellectual Property Administration on March 17, 2021 and entitled "METHOD FOR PAGING UE IN EDRX, UE, AND NETWORK DEVICE", and claims priority to Chinese Patent Application No. 202110365064.1, filed with the China National Intellectual Property Administration on April 1, 2021 and entitled "SMALL DATA TRANSMISSION METHOD AND COMMUNICATION APPARATUS", which are incorporated herein by reference in their entireties.

### TECHNICAL FIELD

This application relates to the communication field, and more specifically, to a small data transmission method and a communication apparatus in the communication field.

### BACKGROUND

In the field of wireless communication technologies, a terminal device has three states at a radio resource control (radio resource control, RRC) layer: an RRC connected (RRC_CONNECTED) state, an RRC idle (RRC_IDLE) state, and an RRC inactive (RRC_INACTIVE) state. Data transmission can usually be performed between the terminal device and a network device only when the terminal device is in the RRC_CONNECTED state. If transmission of data of the terminal device is not performed between the terminal device in the RRC_CONNECTED state and the network device in a preset time period, the terminal device may enter the RRC_INACTIVE state. When the terminal device is in the RRC_INACTIVE state, the terminal device may store context information of the terminal device, but temporarily break an RRC connection to the network device. When the terminal device needs to perform data transmission, the terminal device may send an RRC resume message to the network device.

However, in some service scenarios, the terminal device in the RRC_IDLE state or the RRC_INACTIVE state has a data transmission requirement, and a data packet that needs to be transmitted is quite small. Such a data packet may be referred to as small data (small data), for example, an instant messaging message, a heartbeat packet, or periodic data. To transmit the small data, the terminal device needs to enter the RRC_CONNECTED state from the RRC_INACTIVE state. However, a size of signaling needed by the terminal device to enter the RRC_CONNECTED state from the RRC_IDLE state or the RRC_INACTIVE state is even greater than that of the small data. Consequently, unnecessary power consumption and signaling overheads of the terminal device are caused.

### SUMMARY

Embodiments of this application provide a small data transmission method and a communication apparatus, so that a terminal device can send first small data in a RRC non-connected state, to reduce signaling overheads.

According to a first aspect, a small data transmission method is provided. The method is applicable to a terminal device, and includes:
when the terminal device is in an RRC non-connected state, determining, based on first duration and a first moment at which first small data needs to be transmitted, whether a target resource for transmitting the first small data is a first configured grant or a first random access resource; and
transmitting the first small data to a network device based on the target resource.

In the foregoing solution, the terminal device may determine, in the RRC non-connected state based on the first duration and the first moment at which the first small data needs to be transmitted, the target resource for transmitting the first small data. In this way, the terminal device may send the first small data to the network device based on the target resource, to avoid signaling overheads caused when the terminal device needs to enter an RRC connected state to send the first small data. In addition, the terminal device refers to the first moment and the first duration in a process of determining the target resource. This helps satisfy a delay requirement of the first small data.

The RRC non-connected state includes an RRC inactive state or an RRC idle state.

It may be understood that, if the terminal device determines that the target resource is the first configured grant, it may be understood as that the terminal device uses CG-SDT to transmit the first small data; or if the terminal device determines that the target resource is the first random access resource, it may be understood as that the terminal device uses RA-SDT to transmit the first small data.

Optionally, if a configured grant corresponding to the CG-SDT is periodic, and a random access resource corresponding to the RA-SDT is periodic, a periodicity of the configured grant corresponding to the CG-SDT is greater than a periodicity of the random access resource corresponding to the RA-SDT.

Optionally, the terminal device may determine, depending on whether a data volume of data is less than a preset value, whether the data is small data. If the data volume is less than the preset value, the data is the small data; otherwise, the data is not the small data. The preset value may be specified in a protocol or configured by the network device for the terminal device.

Optionally, the terminal device may determine, based on a data label of data, whether the data is big data or small data. For example, if the label of the data is a small data label, the data is the small data; or if the label of the data is a big data label, the data is the big data. Alternatively, the network device and/or the terminal device may determine the label of the data based on a data volume.

Optionally, the terminal device may determine, based on a data type of data, whether the data is big data or small data. For example, if the type of the data is a heartbeat packet, the data is the small data; or if the type of the data is a file or a video, the data is the big data. Alternatively, the network device and/or the terminal device may determine the label of the data based on a data volume.

Optionally, the first duration may be duration of a timer, and the terminal device may determine a start moment of the timer based on a time status.

Optionally, the first duration may be configured by the network device or preset.

Optionally, before the method, the terminal device needs to determine whether the RA-SDT is valid and whether the CG-SDT is valid. If the RA-SDT is valid, and the CG-SDT is valid, the method in this embodiment of this application is performed. If the RA-SDT is invalid, the terminal device uses the CG-SDT to transmit the first small data.

In some possible implementations, the determining, based on first duration and a first moment at which first small data needs to be transmitted, whether a target resource for transmitting the first small data is a first configured grant or a first random access resource includes:
determining, depending on whether a first time period overlaps the first moment, whether the target resource for transmitting the first small data is the first configured grant or the first random access resource, where
a start point of the first time period is a start moment of any configured grant in the first configured grant, and duration of the first time period is the first duration.

In the foregoing solution, the terminal device may start timing at the start moment of the any configured grant, and the timing lasts for the first duration. The terminal device may determine, with reference to the first moment at which the first small data needs to be transmitted, whether to use the first random access resource or the first configured grant. In this way, the terminal device may determine, with reference to time, whether to use the RA-SDT or the CG-SDT, so that flexibility of determining the target resource for sending the first small data can be improved, and the delay requirement of the first small data can also be considered.

Optionally, a start point of the first time period may alternatively be an end moment of any configured grant in the first configured grant, and duration of the first time period is the first duration.

Optionally, a start point of the first time period may alternatively be any moment between a start moment and an end moment of any configured grant in the first configured grant.

Optionally, the first configured grant may include at least one configured grant, and the at least one configured grant may be periodic or aperiodic. This is not limited in this embodiment of this application. In other words, the first configured grant may be understood as a group of configured grants. Alternatively, the first configured grant may be a configured grant, or may be a configured grant in a group of configured grants. In this case, the start point of the first time period is a start moment of the first configured grant, an end moment of the first configured grant, or a moment between the start moment and the end moment of the first configured grant.

Optionally, the first configured grant is a resource specific to the terminal device. Optionally, the first configured grant is a resource corresponding to a first logical channel of the terminal device. Optionally, the first configured grant is a resource corresponding to a first service of the terminal device.

Optionally, the first duration is duration specific to the terminal device. Optionally, the first duration is duration corresponding to the first logical channel of the terminal device. Optionally, the first duration is duration corresponding to the first service of the terminal device.

Optionally, the first configured grant and the first duration correspond to the terminal device. Optionally, the first configured grant and the first duration correspond to the first logical channel of the terminal device. Optionally, the first configured grant and the first duration correspond to the first service of the terminal device.

Optionally, the network device may configure a plurality of groups of configured grants for the terminal device. The first configured grant may be a group of configured grants in the plurality of groups of configured grants, or the first configured grant is any configured grant in one group of configured grants. This is not limited in this embodiment of this application.

Optionally, the determining, depending on whether a first time period overlaps the first moment, whether the target resource for transmitting the first small data is the first configured grant or the first random access resource may be replaced with: determining, depending on whether duration between the first moment and a previous configured grant is greater than the first duration, whether the target resource for transmitting the first small data is the first configured grant or the first random access resource.

In some possible implementations, the determining, depending on whether a first time period overlaps the first moment, whether the target resource for transmitting the first small data is the first configured grant or the first random access resource includes:

If the first time period does not overlap the first moment, the terminal device determines that the target resource for transmitting the first small data is the first configured grant; or
if the first time period overlaps the first moment, the terminal device determines that the target resource for transmitting the first small data is the first random access resource.

Optionally, the first random access resource may be a random access resource closest to a current moment in the first time period.

In the foregoing solution, if the first moment overlaps the first time period, it indicates that the first moment is farther from a next configured grant. In this case, the terminal device sends the first small data based on the first random access resource. In other words, the terminal device uses the RA-SDT to send the first small data. The first random access resource is a resource in the first time period. If the first moment does not overlap the first time period, it indicates that the first moment is closer to a next configured grant, and the CG-SDT is preferentially selected to transmit the first small data. In this way, the target resource for transmitting the first small data may be determined with reference to a distance from the next configured grant. This helps satisfy the delay requirement of the first small data.

Optionally, whether the target resource for transmitting the first small data is the first configured grant or the first random access resource is determined depending on whether duration between the first moment and a previous configured grant is greater than the first duration: If the duration between the first moment and the previous configured grant is less than or equal to the first duration, the target resource for transmitting the first small data is the first random access resource; or if the duration between the first moment and the previous configured grant is greater than the first duration, the target resource for transmitting the first small data is the first configured grant.

In some possible implementations, the determining, based on first duration and a first moment at which first small data needs to be transmitted, whether a target resource for transmitting the first small data is a first configured grant or a first random access resource includes:
determining, depending on whether there is a configured grant in a second time period, whether the target resource for transmitting the first small data is the first configured grant or the first random access resource, where
a start point of the second time period is the first moment, and duration of the second time period is the first duration.

It may be understood that, in the foregoing solution, the first duration may be understood as maximum allowed waiting time.

In the foregoing solution, the start point of the second time period may be the first moment at which the first small data needs to be transmitted, namely, an arrival moment of the first small data. In other words, after the first small data arrives, the terminal device determines whether there is a configured grant in the first duration, and determines, depending on whether there is a configured grant in the first duration, whether to use the CG-SDT or the RA-SDT to transmit the first small data. Time is considered in the process of determining the target resource. This helps satisfy the delay requirement of the first small data.

Optionally, the determining, depending on whether there is a configured grant in a second time period, whether the target resource for transmitting the first small data is the first configured grant or the first random access resource may be replaced with: The terminal device determines, depending on whether duration between the first moment and a next configured grant is greater than or equal to the first duration, whether the target resource for transmitting the first small data is the first configured grant or the first random access resource.

Optionally, the determining, depending on whether there is a configured grant in a second time period, whether the target resource for transmitting the first small data is the first configured grant or the first random access resource may be replaced with: determining, depending on whether there is a configured grant in the first duration starting from the first moment, whether the target resource for transmitting the first small data is the first configured grant or the first random access resource.

It may be understood that start moments of a first time period and the second time period are different, and first duration of the first time period may be the same as or different from the first duration of the second time period. This is not limited in this embodiment of this application.

In some possible implementations, the determining, depending on whether there is a configured grant in a second time period, whether the target resource for transmitting the first small data is the first configured grant or the first random access resource includes:
if there is a configured grant in the second time period, determining that the target resource for transmitting the first small data is the first configured grant; or
if there is no configured grant in the second time period, determining that the target resource for transmitting the first small data is the first random access resource.

In the foregoing solution, the start point of the second time period may be the first moment at which the first small data needs to be transmitted, namely, the arrival moment of the first small data. In other words, after the first small data arrives, the terminal device determines whether there is a configured grant in the first duration. If there is a configured grant in the first duration, it indicates that there is a configured grant within the maximum allowed waiting time, and the terminal device may determine to use the CG-SDT to transmit the first small data. If there is no configured grant in the first duration, it indicates that there is no configured grant within the maximum allowed waiting time. If the next configured grant continues to be waited, waiting time is excessively long. To reduce the waiting time, the RA-SDT may be selected to send the first small data. This helps satisfy the delay requirement of the first small data.

Optionally, that the terminal device determines, depending on whether duration between the first moment and a next configured grant is greater than or equal to the first duration, whether the target resource for transmitting the first small data is the first configured grant or the first random access resource includes: if the duration between the first moment and the next configured grant is greater than or equal to the first duration, determining that the target resource for transmitting the first small data is the first random access resource; or if the duration between the first moment and the next configured grant is less than the first duration, determining that the target resource for transmitting the first small data is the first configured grant, where the first configured grant includes the next configured grant. In other words, the terminal device may determine, based on the duration between the first moment and the next configured grant, whether the target resource is the first configured grant or the first random access resource. This helps satisfy the delay requirement of the first small data.

Optionally, the determining, depending on whether there is a configured grant in the first duration starting from the first moment, whether the target resource for transmitting the first small data is the first configured grant or the first random access resource includes: if there is a configured grant in the first duration starting from the first moment, determining that the target resource for transmitting the first small data is the first configured grant; or if there is no configured grant in the first duration starting from the first moment, determining that the target resource for transmitting the first small data is the first random access resource, where the first random access resource is a random access resource that is closest to or closer to the first moment in the first duration.

In some possible implementations, the method further includes: The terminal device determines a first parameter, where the first parameter indicates whether to allow using a random access process to transmit small data; and
the determining, based on first duration and a first moment at which first small data needs to be transmitted, whether a target resource for transmitting the first small data is a first configured grant or a first random access resource includes:
determining, based on the first duration, the first parameter, and the first moment at which the first small data needs to be transmitted, whether the target resource for transmitting the first small data is the first configured grant or the first random access resource.

In the foregoing solution, the terminal device may determine, based on the first parameter, the first duration, and the first moment at which the first small data needs to be transmitted, whether the target resource is the first configured grant or the first random access resource, to improve flexibility of determining, by the terminal device, the target resource for sending the first small data.

Optionally, the first parameter indicates whether to allow the terminal device to use the random access process to transmit the small data.

Optionally, the first parameter indicates whether to allow using the random access process on the first logical channel of the terminal device to transmit the small data.

Optionally, the first parameter indicates whether to allow the terminal device to use the random access process to transmit small data of the first service.

Optionally, the first parameter may be configured by the network device or preset.

In some possible implementations, the determining, based on the first duration, the first parameter, and the first moment at which the first small data needs to be transmitted, whether the target resource for transmitting the first small data is the first configured grant or the first random access resource includes:
determining, depending on whether the first time period overlaps the first moment and based on the first parameter, whether the target resource for transmitting the first small data is the first configured grant or the first random access resource, where
the start point of the first time period is the start moment of the any configured grant in the first configured grant, and the duration of the first time period is the first duration.

In the foregoing solution, the terminal device may start timing at the start moment of the any configured grant, and the timing lasts for the first duration. The terminal device may determine, with reference to the first moment at which the first small data needs to be transmitted and depending on whether to allow using the random access process to transmit the small data, whether to use the first random access resource or the first configured grant. In this way, the terminal device may determine, with reference to the time and depending on whether to allow using the RA-SDT, whether to use the RA-SDT or the CG-SDT, so that flexibility of determining the target resource for sending the first small data can be improved, and the delay requirement of the first small data can also be considered.

Optionally, the determining, depending on whether the first time period overlaps the first moment and based on the first parameter, whether the target resource for transmitting the first small data is the first configured grant or the first random access resource may be replaced with: determining, depending on whether the duration between the first moment and the previous configured grant is greater than the first duration and based on the first parameter, whether the target resource for transmitting the first small data is the first configured grant or the first random access resource.

In some possible implementations, the determining, depending on whether the first time period overlaps the first moment and based on the first parameter, whether the target resource for transmitting the first small data is the first configured grant or the first random access resource includes:
if the first time period does not overlap the first moment, and the first parameter indicates not to allow using the random access process to transmit the small data, determining that the target resource for transmitting the first small data is the first configured grant; or
if the first time period overlaps the first moment, and the first parameter indicates to allow using the random access process to transmit the small data, determining that the target resource for transmitting the first small data is the first random access resource.

Optionally, the first random access resource may be the random access resource closest to the current moment in the first time period.

In the foregoing solution, if the first moment overlaps the first time period, it indicates that the first moment is farther from the next configured grant, and the first parameter indicates to allow using the RA-SDT. In this case, the terminal device sends the first small data based on the first random access resource. In other words, the terminal device uses the RA-SDT to send the first small data. The first random access resource is the resource in the first time period. If the first moment does not overlap the first time period, it indicates that the first moment is closer to the next configured grant, and the first parameter indicates not to allow using the RA-SDT. The CG-SDT is selected to transmit the first small data. In this way, the target resource for transmitting the first small data may be determined with reference to the distance from the next configured grant and the first parameter. This helps satisfy the delay requirement of the first small data, and can also improve flexibility of determining the target resource.

Optionally, if the first time period overlaps the first moment, and the first parameter indicates not to allow using the random access process to transmit the small data, the target resource for transmitting the first small data is the first configured grant.

Optionally, if the first time period does not overlap the first moment, and the first parameter indicates to allow using the random access process to transmit the small data, the target resource for transmitting the first small data is the first random access resource and/or the first configured grant.

Optionally, the if the first time period does not overlap the first moment, and the first parameter indicates not to allow using the random access process to transmit the small data, determining that the target resource for transmitting the first small data is the first configured grant may be replaced with: if the duration between the first moment and the previous configured grant is greater than the first duration, and the first parameter indicates not to allow using the random access process to transmit the small data, determining that the target resource for transmitting the first small data is the first configured grant.

Optionally, the if the first time period overlaps the first moment, and the first parameter indicates to allow using the random access process to transmit the small data, determining that the target resource for transmitting the first small data is the first random access resource may be replaced with: if the duration between the first moment and the previous configured grant is less than or equal to the first duration, and the first parameter indicates to allow using the random access process to transmit the small data, determining that the target resource for transmitting the first small data is the first random access resource.

In some possible implementations, the determining, based on the first duration, the first parameter, and the first moment at which the first small data needs to be transmitted, whether the target resource for transmitting the first small data is the first configured grant or the first random access resource includes:
determining, depending on whether there is a configured grant in the second time period and based on the first parameter, whether the target resource for transmitting the first small data is the first configured grant or the first random access resource, where
the start point of the second time period is the first moment, and the duration of the second time period is the first duration.

It may be understood that, in the foregoing solution, the first duration may be understood as the maximum allowed waiting time.

In the foregoing solution, the start point of the second time period may be the first moment at which the first small data needs to be transmitted, namely, the arrival moment of the first small data. In other words, after the first small data arrives, the terminal device determines whether there is a configured grant in the first duration, and determines, depending on whether there is a configured grant in the first duration and based on the first parameter, whether to use the CG-SDT or the RA-SDT to transmit the first small data, so that flexibility of determining the target resource by the terminal device can be improved. In addition, the time is considered in the process of determining the target resource. This helps satisfy the delay requirement of the first small data.

Optionally, the determining, depending on whether there is a configured grant in the second time period and based on the first parameter, whether the target resource for transmitting the first small data is the first configured grant or the first random access resource may be replaced with: The terminal device determines, depending on whether the duration between the first moment and the next configured grant is greater than or equal to the first duration and based on the first parameter, whether the target resource for transmitting the first small data is the first configured grant or the first random access resource.

Optionally, the determining, depending on whether there is a configured grant in the second time period and based on the first parameter, whether the target resource for transmitting the first small data is the first configured grant or the first random access resource may be replaced with: determining, depending on whether there is a configured grant in the first duration starting from the first moment and based on the first parameter, whether the target resource for transmitting the first small data is the first configured grant or the first random access resource.

In some possible implementations, the determining, depending on whether there is a configured grant in the second time period and based on the first parameter, whether the target resource for transmitting the first small data is the first configured grant or the first random access resource includes:
if there is a configured grant in the second time period, and the first parameter indicates not to allow using the random access process to transmit the small data, determining that the target resource for transmitting the first small data is the first configured grant; or
if there is no configured grant in the second time period, and the first parameter indicates to allow using the random access process to transmit the small data, determining that the target resource for transmitting the first small data is the first random access resource.

In the foregoing solution, the start point of the second time period may be the first moment at which the first small data needs to be transmitted, namely, the arrival moment of the first small data. In other words, after the first small data arrives, the terminal device determines whether there is a configured grant in the first duration. If there is a configured grant in the first duration, it indicates that there is a configured grant within the maximum allowed waiting time, and the first parameter indicates not to allow using the RA-SDT. In this case, the terminal device may determine to use the CG-SDT to transmit the first small data. If there is no configured grant in the first duration, it indicates that there is no configured grant in the maximum allowed waiting time, and the first parameter indicates to allow using the RA-SDT. If the next configured grant continues to be waited, the waiting time is excessively long. To reduce the waiting time, the RA-SDT may be selected to send the first small data. This helps satisfy the delay requirement of the first small data.

Optionally, if there is a configured grant in the second time period, and the first parameter indicates to allow using the random access process to transmit the small data, the target resource for transmitting the first small data is the first configured grant and/or the first random access resource.

Optionally, if there is no configured grant in the second time period, and the first parameter indicates not to allow using the random access process to transmit the small data, the target resource for transmitting the first small data is the first configured grant, where the first configured grant includes the next configured grant after the second time period.

Optionally, the if there is a configured grant in the second time period, and the first parameter indicates not to allow using the random access process to transmit the small data, determining that the target resource for transmitting the first small data is the first configured grant may be replaced with: if the duration between the first moment and the next configured grant is less than or equal to the first duration, and the first parameter indicates not to allow using the random access process to transmit the small data, determining that the target resource for transmitting the first small data is the first configured grant, where the first configured grant includes the next configured grant.

Optionally, the if there is no configured grant in the second time period, and the first parameter indicates to allow using the random access process to transmit the small data, determining that the target resource for transmitting the first small data is the first random access resource may be replaced with: if the duration between the first moment and the next configured grant is greater than the first duration, and the first parameter indicates to allow using the random access process to transmit the small data, determining that the target resource for transmitting the first small data is the first random access resource.

Optionally, the if there is a configured grant in the second time period, and the first parameter indicates not to allow using the random access process to transmit the small data, determining that the target resource for transmitting the first small data is the first configured grant may be replaced with: if there is a configured grant in the first duration starting from the first moment, and the first parameter indicates not to allow using the random access process to transmit the small data, determining that the target resource for transmitting the first small data is the first configured grant.

Optionally, the if there is no configured grant in the second time period, and the first parameter indicates to allow using the random access process to transmit the small data, determining that the target resource for transmitting the first small data is the first random access resource may be replaced with: if there is no configured grant in the first duration starting from the first moment, and the first parameter indicates not to allow using the random access process to transmit the small data, determining that the target resource for transmitting the first small data is the first random access resource.

In some possible implementations, if the target resource is the first configured grant, the transmitting the first small data to a network device based on the target resource includes:
determining a next configured grant to a current moment, where the first configured grant includes the next configured grant; and
transmitting the first small data to the network device on the next configured grant to the current moment.

In the foregoing solution, the terminal device may select the configured grant closest to the current moment to transmit the first small data.

Optionally, the first moment at which the first small data needs to be transmitted may be before the current moment.

In some possible implementations, the method further includes: The terminal device receives first indication information sent by the network device, where the first indication information indicates the first duration and/or the first parameter, and the first parameter indicates whether to allow using the random access process to transmit the small data.

In the foregoing solution, the network device may send, to the terminal device, the first indication information indicating the first duration, the first indication information indicating the first parameter, or the first indication information indicating the first duration and the first parameter. The terminal device may determine the first duration and/or the first parameter based on the first indication information. In other words, the first duration may be indicated by the network device, and the first parameter may be preset; the first duration may be preset, and the first parameter may be indicated by the network device; or both the first duration and the first parameter may be indicated by the network device. Certainly, both the first duration and the first parameter may be preset.

Optionally, the network device may indicate the first duration and the first parameter by different indication information, and is not limited to using a same piece of first indication information for indication. If the network device indicates the first duration and the first parameter by the different indication information, the different indication information may be in one message or different messages sent by the network device to the terminal device. This is not limited in this application.

In some possible implementations, that the terminal device receives first indication information sent by the network device includes:
The terminal device in an RRC connected state receives an RRC reconfiguration message sent by the network device, where the RRC reconfiguration message includes the first indication information.

In the foregoing solution, the terminal device in the RRC connected state can receive the RRC reconfiguration message sent by the network device. The RRC reconfiguration message includes the first indication information. This helps the terminal device in the RRC connected state receive the first indication information.

Optionally, the terminal device in the RRC connected state may send an RRC request message to the network device, and the network device sends the RRC reconfiguration message to the terminal device in response to the RRC request message. Optionally, the network device may actively send the RRC reconfiguration message to the terminal device without a request of the terminal device. Atrigger condition for sending the RRC reconfiguration message is not limited in this embodiment of this application.

In some possible implementations, that the terminal device receives first indication information sent by the network device includes:
The terminal device receives an RRC release message sent by the network device, where the RRC release message includes the first indication information, and the terminal device enters the RRC non-connected state after receiving the RRC release message.

Optionally, the terminal device may receive, in the RRC connected state, the RRC release message sent by the network device, and the terminal device enters the RRC non-connected state after receiving the RRC release message.

Optionally, the terminal device may receive the RRC release message in the RRC non-connected state, and the terminal device remains in the RRC non-connected state after receiving the RRC release message.

In some possible implementations, the first indication information specifically indicates that the first duration and/or the first parameter correspond/corresponds to a first logical channel.

In the foregoing solution, the first indication information may indicate that the first duration corresponds to the first logical channel, indicate that the first parameter corresponds to the first logical channel, or indicate that the first duration and the first parameter correspond to the first logical channel. In other words, the first duration may be configured by the network device for the first logical channel, and the first parameter may be configured by the network device for the first logical channel.

Optionally, the method further includes: The terminal device may further receive indication information for the first logical channel and the first configured grant; and the terminal device determines, based on that the first logical channel corresponds to the first configured grant and that the first logical channel corresponds to the first duration, that the first configured grant corresponds to the first duration.

In other words, the first time period is used as an example. A start moment of the first time period is the start moment of the first configured grant corresponding to the first duration. In other words, the first time period is a time period corresponding to the first logical channel. In addition, the terminal device may determine, based on that the first logical channel corresponds to the first configured grant and that the first logical channel corresponds to the first parameter, that the first configured grant corresponds to the first parameter. In other words, the first parameter indicates whether to allow using the RA-SDT on the first configured grant corresponding to the first logical channel.

The second time period is used as an example. The second time period is a time period corresponding to the first logical channel.

In some possible implementations, the first indication information specifically indicates that the first duration and/or the first parameter correspond/corresponds to a first service.

In the foregoing solution, the first indication information may indicate that the first duration corresponds to the first service, indicate that the first parameter corresponds to the first service, or indicate that the first duration and the first parameter correspond to the first service. In other words, the first duration may be configured by the network device for the first service, and the first parameter may be configured by the network device for the first service.

Optionally, the method further includes: The terminal device may further receive indication information for the first service and the first configured grant; and the terminal device determines, based on that the first service corresponds to the first configured grant and that the first service corresponds to the first duration, that the first configured grant corresponds to the first duration.

In other words, a start moment of the first time period is the start moment of the first configured grant corresponding to the first duration. In other words, the first time period is a time period corresponding to the first service. In addition, the terminal device may determine, based on that the first service corresponds to the first configured grant and that the first service corresponds to the first parameter, that the first configured grant corresponds to the first parameter. In other words, the first parameter indicates whether to allow using the RA-SDT on the first configured grant corresponding to the first service.

The second time period is used as an example. The second time period is a time period corresponding to the first service.

In some possible implementations, the first indication information specifically indicates that the first duration and/or the first parameter correspond/corresponds to the terminal device. That is, the network device configures the first duration and/or the first parameter for the terminal device.

In some possible implementations, the first duration is related to a delay requirement of the first small data.

In the foregoing solution, the first duration is related to the delay requirement of the first small data. In this way, in a process of determining whether to use the RA-SDT or the CG-SDT, the terminal device may consider the delay requirement of the first small data. This helps satisfy the delay requirement of the first small data.

Optionally, for the first time period, a higher delay requirement of the first small data indicates a longer first duration, and a lower delay requirement of the first small data indicates a shorter first duration. Optionally, for the second time period, a higher delay requirement of the first small data indicates a shorter first duration, and a lower delay requirement of the first small data indicates a longer first duration.

According to a second aspect, a small data transmission method is provided. The method is applied to a network device, and includes: sending first indication information to a terminal device, where the first indication information indicates first duration; and
receiving first small data sent by the terminal device in a radio resource control RRC non-connected state based on a target resource, where the target resource is determined based on the first duration.

In the foregoing solution, the first duration configured by the network device is considered for the target resource for sending the first small data to the network device by the terminal device in the RRC non-connected state. This helps satisfy a delay requirement of the first small data. In addition, the terminal device in the RRC non-connected state may send the first small data to the network device based on the target resource, to avoid signaling overheads caused when the terminal device needs to enter an RRC connected state to send the first small data.

In some possible implementations, the target resource is a first configured grant or a first random access resource, and the first configured grant or the first random access resource is determined based on the first duration.

In some possible implementations, the first indication information further indicates a first parameter, the first parameter indicates whether to allow using a random access process to transmit small data, and the target resource is determined based on the first duration and the first parameter.

In some possible implementations, the sending first indication information to a terminal device includes:
sending an RRC reconfiguration message to the terminal device in an RRC connected state, where the RRC reconfiguration message includes the first indication information.

In some possible implementations, the sending first indication information to a terminal device includes: sending an RRC release message to the terminal device, where the RRC release message includes the first indication information, and the RRC release message indicates the terminal device to enter the RRC non-connected state.

In some possible implementations, the first indication information specifically indicates that the first duration and/or the first parameter correspond/corresponds to a first logical channel.

In some possible implementations, the first indication information specifically indicates that the first duration and/or the first parameter correspond/corresponds to a first service.

In some possible implementations, the first duration is related to a delay requirement of the first small data.

For other descriptions or effective effects of the second aspect, refer to the descriptions of the first aspect.

According to a third aspect, a small data transmission method is provided. The method is applicable to a terminal device, the terminal device is in a radio resource control RRC non-connected state, and the method includes:
determining, depending on whether first duration ends and based on a first moment at which first small data needs to be transmitted, a target resource for transmitting the first small data, where a start moment of the first duration is a start moment of a second configured grant, and the start moment of the second configured grant is before the first moment; and
transmitting the first small data to a network device based on the target resource, where
the target resource is a third configured grant or a first random access resource, the second configured grant and the third configured grant are two adjacent configured grants in terms of time, a time interval between the second configured grant and the third configured grant is greater than the first duration, and time of the first random access resource is between time of the second configured grant and time of the third configured grant.

In the foregoing solution, the terminal device may determine, depending on whether the first duration ends and based on the first moment, whether the target resource is the third configured grant or the first random access resource. In a process of determining the target resource, the terminal device considers the first duration and the first moment. This helps satisfy a delay requirement, and can also avoid signaling overheads caused when the terminal device needs to enter an RRC connected state to send the first small data.

Optionally, the start moment of the first duration is an end moment of the second configured grant. Optionally, the start moment of the first duration is a moment between the start moment and the end moment of the second configured grant.

The RRC non-connected state includes an RRC inactive state or an RRC idle state.

Optionally, the third configured grant and the second configured grant may be two resources in a group of configured grants configured by the network device.

It may be understood that, if the terminal device determines that the target resource is the third configured grant, it may be understood as that the terminal device uses CG-SDT to transmit the first small data; or if the terminal device determines that the target resource is the first random access resource, it may be understood as that the terminal device uses RA-SDT to transmit the first small data.

Optionally, if a configured grant corresponding to the CG-SDT is periodic, and a random access resource corresponding to the RA-SDT is periodic, a periodicity of the configured grant corresponding to the CG-SDT is greater than a periodicity of the random access resource corresponding to the RA-SDT.

For descriptions of the first moment, refer to the descriptions of the first moment in the first aspect. For the first duration, refer to the first duration corresponding to the first time period in the first aspect. To avoid repetition, details are not described in this embodiment of this application.

In some possible implementations, that the terminal device determines, depending on whether first duration ends and based on a first moment at which first small data needs to be transmitted, a target resource for transmitting the first small data includes:
If the first moment is after the first duration ends, the terminal device determines that the target resource for transmitting the first small data is the third configured grant; or
if the first moment is before the first duration ends, the terminal device determines that the target resource for transmitting the first small data is the first random access resource.

In some possible implementations, before the terminal device determines, depending on whether the first duration ends and based on the first moment at which the first small data needs to be transmitted, the target resource for transmitting the first small data, the method further includes:
The terminal device determines a first parameter, where the first parameter indicates whether to allow using a random access process to transmit small data.

That if the first moment is after the first duration ends, the terminal device determines that the target resource for transmitting the first small data is the third configured grant includes:

If the first moment is after the first duration ends, and the first parameter indicates not to allow using the random access process to transmit the small data, the terminal device determines that the target resource for transmitting the first small data is the third configured grant.

That if the first moment is before the first duration ends, the terminal device determines that the target resource for transmitting the first small data is the first random access resource includes:
If the first moment is before the first duration ends, and the first parameter indicates to allow using the random access process to transmit the small data, the terminal device determines that the target resource for transmitting the first small data is the first random access resource.

In some possible implementations, the method further includes:
The terminal device receives first indication information sent by the network device, where the first indication information indicates the first duration and/or the first parameter.

In some possible implementations, before the terminal device enters the RRC non-connected state, the terminal device is in an RRC connected state.

That the terminal device receives first indication information sent by the network device includes:
The terminal device in the RRC connected state receives an RRC reconfiguration message sent by the network device, where the RRC reconfiguration message includes the first indication information.

In some possible implementations, that the terminal device receives first indication information sent by the network device includes:
The terminal device receives an RRC release message sent by the network device, where the RRC release message includes the first indication information, and the terminal device enters the RRC non-connected state after receiving the RRC release message.

In some possible implementations, the first indication information specifically indicates that the first duration and/or the first parameter correspond/corresponds to a first logical channel.

The method further includes:
The terminal device determines, based on the first indication information, that the first duration and/or the first parameter correspond/corresponds to the first logical channel; and
the terminal device determines that the first logical channel corresponds to the second configured grant and the third configured grant.

That the terminal device transmits the first small data to a network device based on the target resource includes:
The terminal device transmits the first small data to the network device based on the first logical channel and the target resource.

In some possible implementations, the first indication information specifically indicates that the first duration and/or the first parameter correspond/corresponds to a first service.

The method further includes:
The terminal device determines, based on the first indication information, that the first duration and/or the first parameter correspond/corresponds to the first service; and
the terminal device determines that the first service corresponds to the second configured grant and the third configured grant.

That the terminal device transmits the first small data to a network device based on the target resource includes:
The terminal device transmits, to the network device based on the target resource, first small data corresponding to the first service.

In some possible implementations, the first indication information specifically indicates that the first duration and/or the first parameter correspond/corresponds to the terminal device.

The method further includes:
The terminal device determines, based on the first indication information, that the first duration and/or the first parameter correspond/corresponds to the terminal device; and
the terminal device determines that the terminal device corresponds to the second configured grant and the third configured grant.

That the terminal device transmits the first small data to a network device based on the target resource includes:
The terminal device transmits, to the network device based on the target resource, first small data corresponding to the terminal device.

In some possible implementations, the first duration is related to a delay requirement of the first small data.

For other descriptions and beneficial effects of the third aspect, refer to the descriptions of the first aspect. A specific solution in the third aspect may correspond to the solution related to the first time period in the first aspect. To avoid repetition, details are not described in this embodiment of this application.

According to a fourth aspect, a small data transmission method is provided, and includes: A network device sends first indication information to a terminal device, where the first indication information indicates first duration; and
the network device receives first small data sent by the terminal device in a radio resource control RRC non-connected state based on a target resource, where the target resource is determined by the terminal device depending on whether the first duration ends and based on a first moment at which the first small data needs to be transmitted, where
the target resource is a third configured grant or a first random access resource, a second configured grant and the third configured grant are two adjacent configured grants, a time interval between the second configured grant and the third configured grant is greater than the first duration, and time of the first random access resource is between time of the second configured grant and time of the third configured grant.

In some possible implementations, the first indication information further indicates a first parameter, the first parameter indicates whether to allow using a random access process to transmit small data, and the target resource is determined by the terminal device depending on whether the first duration ends and based on the first moment at which the first small data needs to be transmitted and the first parameter.

In some possible implementations, the terminal device is in an RRC connected state, and that a network device sends first indication information to a terminal device includes:
The network device sends an RRC reconfiguration message to the terminal device, where the RRC reconfiguration message includes the first indication information.

In some possible implementations, the method includes:
The network device sends an RRC release message to the terminal device, where the RRC release message includes the first indication information, and the RRC release message indicates the terminal device to enter the RRC non-connected state.

In some possible implementations, the first indication information specifically indicates that the first duration and/or the first parameter correspond/corresponds to a first logical channel, and the first logical channel corresponds to the second configured grant.

That the network device receives first small data sent by the terminal device in an RRC non-connected state based on a target resource includes:
The network device receives the first small data sent by the terminal device in the RRC non-connected state based on the target resource and the first logical channel.

In some possible implementations, the first indication information specifically indicates that the first duration and/or the first parameter correspond/corresponds to a first service, and the first service corresponds to the second configured grant.

That the network device receives first small data sent by the terminal device in an RRC non-connected state based on a target resource includes:
The network device receives first small data that corresponds to the first service and that is sent by the terminal device in the RRC non-connected state based on the target resource.

In some possible implementations, the first indication information specifically indicates that the first duration and/or the first parameter correspond/corresponds to the terminal device, and the terminal device corresponds to the second configured grant.

That the network device receives first small data sent by the terminal device in an RRC non-connected state based on a target resource includes:
The network device receives first small data that is of the terminal device and that is sent by the terminal device in the RRC non-connected state based on the target resource.

In some possible implementations, the first duration is related to a delay requirement of the first small data.

For other descriptions and beneficial effects of the fourth aspect, refer to the descriptions of the second aspect. To avoid repetition, details are not described in this embodiment of this application.

According to a fifth aspect, a small data transmission method is provided. A terminal device is in a radio resource control RRC non-connected state, and the method includes:
The terminal device determines, depending on whether there is a configured grant in first duration, a target resource for transmitting first small data, where a start moment of the first duration is a first moment that is determined by the terminal device and at which the first small data needs to be transmitted; and
the terminal device transmits the first small data to a network device based on the target resource, where
the target resource is a third configured grant or a first random access resource in the first duration, and time of the first random access resource is in the first duration.

In the foregoing solution, the terminal device may determine, depending on whether there is a configured grant in the first duration, whether the target resource is the third configured grant or the first random access resource. In a process of determining the target resource, the terminal device considers the first duration. This helps satisfy a delay requirement, and can also avoid signaling overheads caused when the terminal device needs to enter an RRC connected state to send the first small data.

The RRC non-connected state includes an RRC inactive state or an RRC idle state.

Optionally, the third configured grant is a resource in a group of configured grants configured by the network device.

It may be understood that, if the terminal device determines that the target resource is the third configured grant, it may be understood as that the terminal device uses CG-SDT to transmit the first small data; or if the terminal device determines that the target resource is the first random access resource, it may be understood as that the terminal device uses RA-SDT to transmit the first small data.

Optionally, if a configured grant corresponding to the CG-SDT is periodic, and a random access resource corresponding to the RA-SDT is periodic, a periodicity of the configured grant corresponding to the CG-SDT is greater than a periodicity of the random access resource corresponding to the RA-SDT.

For descriptions of the first moment, refer to the descriptions of the first moment in the first aspect. For the first duration, refer to the first duration corresponding to the second time period in the first aspect. To avoid repetition, details are not described in this embodiment of this application.

In some possible implementations, that the terminal device determines, depending on whether there is a configured grant in first duration, a target resource for transmitting first small data includes:
if there is a third configured grant in the first duration, the terminal device determines that the target resource for transmitting the first small data is the third configured grant; or
if there is no configured grant in the first duration, the terminal device determines that the target resource for transmitting the first small data is the first random access resource.

In some possible implementations, before the terminal device determines, depending on whether there is a configured grant in the first duration, the target resource for transmitting the first small data, the method further includes:
The terminal device determines a first parameter, where the first parameter indicates whether to allow using a random access process to transmit small data.

That if there is a third configured grant in the first duration, the terminal device determines that the target resource for transmitting the first small data is the third configured grant includes:

If there is a third configured grant in the first duration, and the first parameter indicates not to allow using the random access process to transmit the small data, the terminal device determines that the target resource for transmitting the first small data is the third configured grant.

That if there is no configured grant in the first duration, the terminal device determines that the target resource for transmitting the first small data is the first random access resource includes:
If there is no configured grant in the first duration, and the first parameter indicates to allow using the random access process to transmit the small data, the terminal device determines that the target resource for transmitting the first small data is the first random access resource.

In some possible implementations, the method further includes:
The terminal device receives first indication information sent by the network device, where the first indication information indicates the first duration and/or the first parameter.

In some possible implementations, before the terminal device enters the RRC non-connected state, the terminal device is in an RRC connected state.

That the terminal device receives first indication information sent by the network device includes:
The terminal device in the RRC connected state receives an RRC reconfiguration message sent by the network device, where the RRC reconfiguration message includes the first indication information.

In some possible implementations, that the terminal device receives first indication information sent by the network device includes:
The terminal device receives an RRC release message sent by the network device, where the RRC release message includes the first indication information, and the terminal device enters the RRC non-connected state after receiving the RRC release message.

In some possible implementations, the first indication information specifically indicates that the first duration and/or the first parameter correspond/corresponds to a first logical channel.

The method further includes:
The terminal device determines, based on the first indication information, that the first duration and/or the first parameter correspond/corresponds to the first logical channel; and
the terminal device determines that the first logical channel corresponds to the third configured grant.

That the terminal device transmits the first small data to a network device based on the target resource includes:
The terminal device transmits the first small data to the network device based on the first logical channel and the target resource.

In some possible implementations, the first indication information specifically indicates that the first duration and/or the first parameter correspond/corresponds to a first service.

The method further includes:
The terminal device determines, based on the first indication information, that the first duration and/or the first parameter correspond/corresponds to the first service; and
the terminal device determines that the first service corresponds to the third configured grant.

That the terminal device transmits the first small data to a network device based on the target resource includes:
The terminal device transmits, to the network device based on the target resource, first small data corresponding to the first service.

In some possible implementations, the first indication information specifically indicates that first duration and/or the first parameter correspond/corresponds to the terminal device.

The method further includes:
The terminal device determines, based on the first indication information, that the first duration and/or the first parameter correspond/corresponds to the terminal device; and
the terminal device determines that the terminal device corresponds to the third configured grant.

That the terminal device transmits the first small data to a network device based on the target resource includes:
The terminal device transmits, to the network device based on the target resource, first small data corresponding to the terminal device.

In some possible implementations, the first duration is related to a delay requirement of the first small data.

For other descriptions and beneficial effects of the fifth aspect, refer to the descriptions of the first aspect. A specific solution in the fifth aspect may correspond to the solution related to the second time period in the first aspect. To avoid repetition, details are not described in this embodiment of this application.

According to a sixth aspect, a small data transmission method is provided, and includes: A network device sends first indication information to a terminal device, where the first indication information indicates first duration; and
the network device receives first small data sent by the terminal device in a radio resource control RRC non-connected state based on a target resource, where the target resource is determined by the terminal device depending on whether there is a configured grant in the first duration, where
the target resource is a third configured grant or a first random access resource in the first duration, and time of the first random access resource is in the first duration.

In some possible implementations, the first indication information further indicates a first parameter, the first parameter indicates whether to allow using a random access process to transmit small data, and the target resource is determined by the terminal device depending on whether there is a configured grant in first duration and based on the first parameter.

In some possible implementations, the terminal device is in an RRC connected state, and that a network device sends first indication information to a terminal device includes:
The network device sends an RRC reconfiguration message to the terminal device, where the RRC reconfiguration message includes the first indication information.

In some possible implementations, the method includes:
The network device sends an RRC release message to the terminal device, where the RRC release message includes the first indication information, and the RRC release message indicates the terminal device to enter the RRC non-connected state.

In some possible implementations, the first indication information specifically indicates that the first duration and/or the first parameter correspond/corresponds to a first logical channel, and the first logical channel corresponds to the third configured grant.

That the network device receives first small data sent by the terminal device in an RRC non-connected state based on a target resource includes:
The network device receives the first small data sent by the terminal device in the RRC non-connected state based on the target resource and the first logical channel.

In some possible implementations, the first indication information specifically indicates that the first duration and/or the first parameter correspond/corresponds to a first service, and the first service corresponds to the third configured grant.

That the network device receives first small data sent by the terminal device in an RRC non-connected state based on a target resource includes:
The network device receives first small data that corresponds to the first service and that is sent by the terminal device in the RRC non-connected state based on the target resource.

In some possible implementations, the first indication information specifically indicates that the first duration and/or the first parameter correspond/corresponds to the terminal device, and the terminal device corresponds to the third configured grant.

That the network device receives first small data sent by the terminal device in an RRC non-connected state based on a target resource includes:
The network device receives first small data that is of the terminal device and that is sent by the terminal device in the RRC non-connected state based on the target resource.

In some possible implementations, the first duration is related to a delay requirement of the first small data.

For other descriptions and beneficial effects of the sixth aspect, refer to the descriptions of the second aspect. To avoid repetition, details are not described in this embodiment of this application.

According to a seventh aspect, a small data transmission apparatus is provided. The apparatus is configured to perform the method in any possible implementation of the first aspect, any possible implementation of the third aspect, or any possible implementation of the fifth aspect. Specifically, the apparatus may include a processing unit and a transceiver unit. The transceiver unit may communicate with the outside, and the processing unit is configured to process data. The transceiver unit may also be referred to as a communication interface or a communication unit.

The apparatus may be configured to perform an action performed by the terminal device in any possible implementation of the first aspect, any possible implementation of the third aspect, or any possible implementation of the fifth aspect. In this case, the apparatus may be referred to as a terminal device. The transceiver unit is configured to perform a transceiving-related operation on the terminal device side in the first aspect, the third aspect, or the fifth aspect. The processing unit is configured to perform a processing-related operation on the terminal device side in the first aspect, the third aspect, or the fifth aspect.

The following uses the first aspect as an example for description.

When the apparatus is in an RRC non-connected state, the processing unit is configured to determine, based on first duration and a first moment at which first small data needs to be transmitted, whether a target resource for transmitting the first small data is a first configured grant or a first random access resource; and the transceiver unit is configured to transmit the first small data to a network device based on the target resource.

In some possible implementations, the processing unit is specifically configured to determine, depending on whether a first time period overlaps the first moment, whether the target resource for transmitting the first small data is the first configured grant or the first random access resource, where a start point of the first time period is a start moment of any configured grant in the first configured grant, and duration of the first time period is the first duration.

In some possible implementations, the processing unit is specifically configured to: if the first time period does not overlap the first moment, determine that the target resource for transmitting the first small data is the first configured grant; or
if the first time period overlaps the first moment, determine, for the terminal device, that the target resource for transmitting the first small data is the first random access resource.

In some possible implementations, the processing unit is specifically configured to determine, depending on whether there is a configured grant in a second time period, whether the target resource for transmitting the first small data is the first configured grant or the first random access resource, where a start point of the second time period is the first moment, and duration of the second time period is the first duration.

In some possible implementations, the processing unit is specifically configured to: if there is a configured grant in the second time period, determine that the target resource for transmitting the first small data is the first configured grant; or if there is no configured grant in the second time period, determine that the target resource for transmitting the first small data is the first random access resource.

In some possible implementations, the processing unit is further configured to determine a first parameter, where the first parameter indicates whether to allow using a random access process to transmit small data; and the processing unit is specifically configured to determine, based on the first duration, the first parameter, and the first moment at which the first small data needs to be transmitted, whether the target resource for transmitting the first small data is the first configured grant or the first random access resource.

In some possible implementations, the processing unit is specifically configured to determine, depending on whether the first time period overlaps the first moment and based on the first parameter, whether the target resource for transmitting the first small data is the first configured grant or the first random access resource, where the start point of the first time period is the start moment of the any configured grant in the first configured grant, and the duration of the first time period is the first duration.

In some possible implementations, the processing unit is specifically configured to: if the first time period does not overlap the first moment, and the first parameter indicates not to allow using the random access process to transmit the small data, determine that the target resource for transmitting the first small data is the first configured grant; or if the first time period overlaps the first moment, and the first parameter indicates to allow using the random access process to transmit the small data, determine that the target resource for transmitting the first small data is the first random access resource.

In some possible implementations, the processing unit is specifically configured to determine, depending on whether there is a configured grant in the second time period and based on the first parameter, whether the target resource for transmitting the first small data is the first configured grant or the first random access resource, where the start point of the second time period is the first moment, and the duration of the second time period is the first duration.

In some possible implementations, the processing unit is specifically configured to: if there is a configured grant in the second time period, and the first parameter indicates not to allow using the random access process to transmit the small data, determine that the target resource for transmitting the first small data is the first configured grant; or if there is no configured grant in the second time period, and the first parameter indicates to allow using the random access process to transmit the small data, determine that the target resource for transmitting the first small data is the first random access resource.

In some possible implementations, if the target resource is the first configured grant, the processing unit is further configured to determine a next configured grant to a current moment, where the first configured grant includes the next configured grant; and the transceiver unit is specifically configured to transmit the first small data to the network device on the next configured grant to the current moment.

In some possible implementations, the transceiver unit is further configured to receive first indication information sent by the network device, where the first indication information indicates the first duration and/or the first parameter, and the first parameter indicates whether to allow using the random access process to transmit the small data.

In some possible implementations, the transceiver unit is specifically configured to receive, for the apparatus in an RRC connected state, an RRC reconfiguration message sent by the network device, where the RRC reconfiguration message includes the first indication information.

In some possible implementations, the transceiver unit is specifically configured to an RRC release message sent by the network device, where the RRC release message includes the first indication information, and the apparatus enters the RRC non-connected state after receiving the RRC release message.

In some possible implementations, the first indication information specifically indicates that the first duration and/or the first parameter correspond/corresponds to a first logical channel.

In some possible implementations, the first indication information specifically indicates that the first duration and/or the first parameter correspond/corresponds to a first service.

In some possible implementations, the first duration is related to a delay requirement of the first small data.

According to an eighth aspect, a small data transmission apparatus is provided. The apparatus is configured to perform the method in any possible implementation of the second aspect, any possible implementation of the fourth aspect, or any possible implementation of the sixth aspect. Specifically, the apparatus may include a sending unit and a receiving unit. The sending unit and the receiving unit may communicate with the outside. The sending unit and the receiving unit may also be referred to as a communication interface or a communication unit.

The apparatus may be configured to perform an action performed by the network device in any possible implementation of the second aspect, any possible implementation of the fourth aspect, or any possible implementation of the sixth aspect. In this case, the apparatus may be referred to as a network device. The sending unit is configured to perform a sending-related operation on the network device side in the second aspect, the fourth aspect, or the sixth aspect. The receiving unit is configured to perform a receiving-related operation on the network device side in the second aspect, the fourth aspect, or the sixth aspect.

Optionally, the apparatus may include a processing unit, and the processing unit is configured to perform a processing-related operation on the network device side in the second aspect, the fourth aspect, or the sixth aspect.

The following uses the second aspect as an example for description.

The sending unit is configured to send first indication information to a terminal device, where the first indication information indicates first duration; and the receiving unit is configured to receive first small data sent by the terminal device in a radio resource control RRC non-connected state based on a target resource, where the target resource is determined based on the first duration.

In some possible implementations, the target resource is a first configured grant or a first random access resource.

In some possible implementations, the first indication information further indicates a first parameter, the first parameter indicates whether to allow using a random access process to transmit small data, and the target resource is determined based on the first duration and the first parameter.

In some possible implementations, the sending unit is specifically configured to send an RRC reconfiguration message to the terminal device in an RRC connected state, where the RRC reconfiguration message includes the first indication information.

In some possible implementations, the sending unit is specifically configured to send an RRC release message to the terminal device, where the RRC release message includes the first indication information, and the RRC release message indicates the terminal device to enter the RRC non-connected state.

In some possible implementations, the first indication information specifically indicates that the first duration and/or the first parameter correspond/corresponds to a first logical channel.

In some possible implementations, the first indication information specifically indicates that the first duration and/or the first parameter correspond/corresponds to a first service.

In some possible implementations, the first duration is related to a delay requirement of the first small data.

According to a ninth aspect, a communication apparatus is provided. The communication apparatus includes a processor and a memory. The processor is coupled to the memory. The memory is configured to store a computer program or instructions. The processor is configured to execute the computer program or the instructions stored in the memory, so that the method in any one of the foregoing aspects or the possible implementations of the foregoing aspects is performed.

For example, the processor is configured to execute the computer program or the instructions stored in the memory, so that the communication apparatus performs the method in any one of the foregoing aspects or the possible implementations of the foregoing aspects.

Optionally, the apparatus includes one or more processors.

Optionally, the apparatus may further include the memory coupled to the processor.

Optionally, the apparatus may include one or more memories.

Optionally, the memory may be integrated with the processor, or the memory and the processor are disposed separately.

Optionally, the apparatus may further include a transceiver.

According to a tenth aspect, a computer-readable storage medium is provided. The computer-readable storage medium stores a computer program (which may also be referred to as instructions or code) for implementing the method in any one of the foregoing aspects or the possible implementations of the foregoing aspects.

For example, when the computer program is executed by a computer, the computer is enabled to perform the method in any one of the foregoing aspects or the possible implementations of the foregoing aspects. The computer may be a communication apparatus.

According to an eleventh aspect, this application provides a chip, including a processor. The processor is configured to read and execute a computer program stored in a memory, to perform the method in any one of the foregoing aspects or the possible implementations of the foregoing aspects.

Optionally, the chip further includes the memory, and the processor is connected to the memory through a circuit or a wire.

Optionally, the chip further includes a communication interface.

According to a twelfth aspect, this application provides a computer program product. The computer program product includes a computer program (which may also be referred to as instructions or code). When the computer program is executed by a computer, the computer is enabled to implement the method in any one of the foregoing aspects or the possible implementations of the foregoing aspects.

### BRIEF DESCRIPTION OF DRAWINGS

FIG. 1 is a schematic diagram of a communication system according to an embodiment of this application;
FIG. 2A is a schematic diagram of a structure of a user plane protocol stack according to an embodiment of this application;
FIG. 2B is a schematic diagram of a structure of a control plane protocol stack according to an embodiment of this application;
FIG. 3 is a schematic diagram of RRC state transition according to an embodiment of this application;
FIG. 4 is a schematic diagram of four-step RA-SDT according to an embodiment of this application;
FIG. 5 is a schematic diagram of two-step RA-SDT according to an embodiment of this application;
FIG. 6 is a schematic diagram of CG-SDT according to an embodiment of this application;
FIG. 7 is a schematic diagram of DRBs according to an embodiment of this application;
FIG. 8 is a schematic diagram of a CG resource and a random access resource according to an embodiment of this application;
FIG. 9 is a schematic diagram of a small data transmission method according to an embodiment of this application;
FIG. 10 is a schematic diagram of another CG resource and another random access resource according to an embodiment of this application;
FIG. 11 is a schematic diagram of another small data transmission method according to an embodiment of this application;
FIG. 12 is a schematic diagram of still another small data transmission method according to an embodiment of this application;
FIG. 13 is a schematic diagram of still another CG resource and still another random access resource according to an embodiment of this application;
FIG. 14 is a schematic diagram of still another small data transmission method according to an embodiment of this application; and
FIG. 15 is a schematic diagram of a communication apparatus according to an embodiment of this application.

### DESCRIPTION OF EMBODIMENTS

The following describes the technical solutions in embodiments of this application with reference to the accompanying drawings in embodiments of this application.

It should be understood that division of manners, cases, types, and embodiments in embodiments of this application are merely for ease of description, but should not constitute a special limitation, and features in various manners, types, cases, and embodiments may be combined when there is no contradiction.

It should be further understood that the terms "first", "second", and "third" in embodiments of this application are merely used for distinguishing, and should not be construed as any limitation on this application. Further, it should be understood that sequence numbers of the processes do not mean execution sequences in various embodiments of this application. The execution sequences of the processes should be determined based on functions and internal logic of the processes, and should not be construed as any limitation on the implementation processes of embodiments of this application.

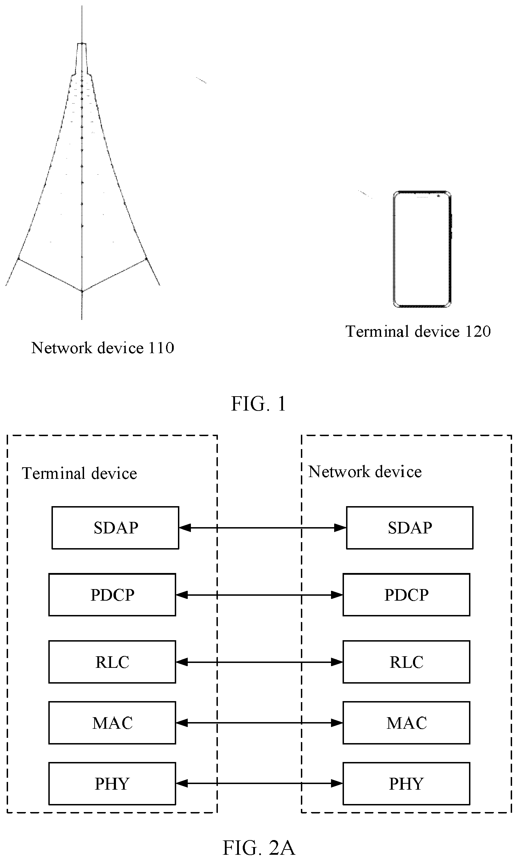

FIG. 1 is a schematic diagram of a communication system to which an embodiment of this application is applicable. As shown in FIG. 1, the wireless communication system may include at least one network device 110. The network device 110 communicates with one or more terminal devices (for example, a terminal device 120 shown in FIG. 1). When the network device sends a signal, the network device is a transmitting end, and the terminal device is a receiving end. When the terminal device sends a signal, the terminal device is a transmitting end, and the network device is a receiving end.

The network device 110 may be an access network device configured to communicate with the terminal device. The access network device may be a base transceiver station (base transceiver station, BTS) in a GSM system or a CDMA system, may be a NodeB (NodeB, NB) in a WCDMA system, may be an evolved NodeB (evolved NodeB, eNB or eNodeB) in an LTE system, may be a radio controller in a cloud radio access network (cloud radio access network, CRAN) scenario, or may be a next generation NodeB (gNodeB, gNB) in a fifth generation mobile network (5th generation mobile network, 5G), namely, new radio (new radio, NR), or a base station in another future network system. Alternatively, the network device 110 may be a relay station, an access point, a vehicle-mounted device, a wearable device, a network device in a future 5G network, a network device in a future evolved PLMN, or the like. This is not limited in this embodiment of this application.

The terminal device 120 may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a terminal in a form of a handheld device, a wearable device, a computing device, a portable device, or a vehicle-mounted device, a smartphone, smart glasses, a terminal device in a 5G network, a terminal device in the future evolved public land mobile network (public land mobile network, PLMN), or the like. This is not limited in this embodiment of this application.

It may be understood that the network device 110 in FIG. 1 may alternatively be replaced with a terminal device 120. In other words, embodiments of this application are applied to a scenario of direct communication such as device to device (device to device, D2D). For example, embodiments of this application may be applied to vehicle to everything (vehicle to everything, V2X).

For ease of description, a device number is omitted below. For example, a "terminal device" represents the "terminal device 120", and the "network device" represents the "network device 110".

FIG. 2A is a schematic diagram of a structure of a user plane air interface protocol stack according to an embodiment of this application. As shown in FIG. 2A, the user plane air interface protocol stack includes but is not limited to a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer. A lower layer of the SDAP layer is the PDCP layer. The SDAP layer is for mapping quality of service (quality of service, QoS) and a data radio bearer (data radio bearer, DRB).

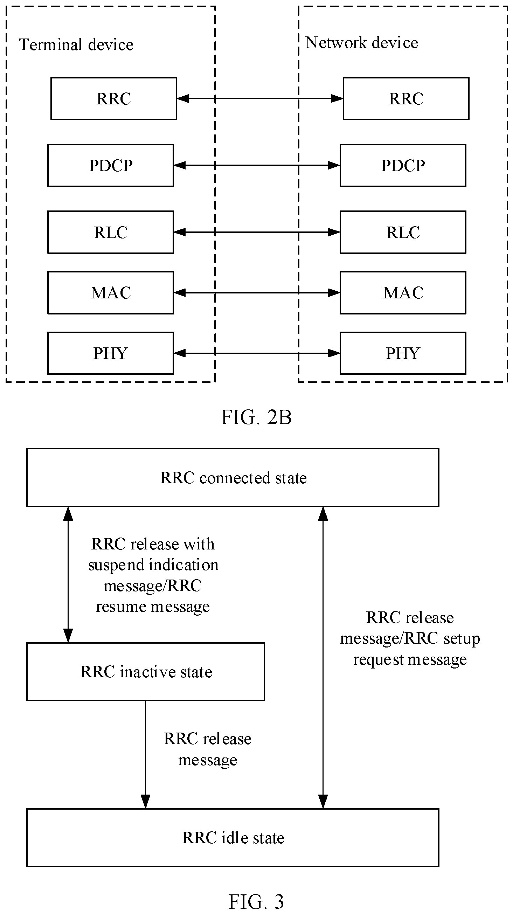

FIG. 2B is a schematic diagram of a structure of a control plane air interface protocol stack according to an embodiment of this application. As shown in FIG. 2B, the control plane air interface protocol stack includes but is not limited to a radio resource control (radio resource control, RRC) layer, a PDCP layer, an RLC layer, a media access control (media access control, MAC) layer, and a physical (physical, PHY) layer. A lower layer of the RRC layer is the PDCP layer.

A lower layer of the PDCP layer is the RLC layer. The PDCP layer may process an RRC message on a control plane. The PDCP layer may perform IP packet header compression to reduce a quantity of bits transmitted through a wireless interface. The PDCP layer may be further responsible for encryption of the control plane and integrity protection of transmission data. At a receiving end, the PDCP protocol layer performs corresponding decryption and decompression operations. One PDCP entity may be configured for each radio bearer. The RLC layer is responsible for segmentation/concatenation, retransmission control, duplication detection, and the like. The RLC layer provides a service for the PDCP layer, and may configure one RLC entity for each radio bearer. The MAC layer controls multiplexing of a logical channel, retransmission of a hybrid automatic repeat request, scheduling of an uplink and a downlink, and the like. The MAC layer provides a service for the RLC layer in a form of the logical channel. The PHY layer is responsible for managing coding/decoding, modulation/demodulation, multi-antenna mapping, and another type of physical layer function. The PHY layer provides a service for the MAC layer in a form of a transport channel.

As shown in FIG. 2A and FIG. 2B, the MAC layer may provide a service for a higher layer (for example, the RLC layer) through a logical channel (logical channel, LCH). According to a type of sent information, logical channels may be classified into a control channel for transmitting control information on the control plane and a traffic channel for transmitting user data on a user plane. In other words, in FIG. 2A, a logical channel between the MAC layer and the RLC layer may be referred to as the traffic channel. In FIG. 2B, the logical channel between the MAC layer and the RLC layer may be referred to as the control channel. The control channel may include but is not limited to a common control channel (common control channel, CCCH) and a dedicated control channel (dedicated control channel, DCCH). The traffic channel may include but is not limited to a dedicated traffic channel (dedicated traffic channel, DTCH). The CCCH may always exist, and a terminal device that has no RRC connection to a network device may also transmit information by using the CCCH. The DCCH may be for transmitting dedicated control information between a terminal device and the network device. The DTCH may be for transmitting the user data between the terminal device and the network device. Usually, the DCCH and the DTCH do not always exist. Instead, the DCCH and the DTCH can be for communication between the terminal device and the network device only after the network device connected to the terminal device resumes a context of the terminal device (context of the terminal device). The context of the terminal device includes but is not limited to an identifier of the terminal device, a configuration related to a radio bearer (radio bearer, RB), a configuration related to security encryption, a configuration related to quality of service, and the like. When configuring a logical channel for the terminal device, the network device also indicates a logical channel group (logical channel group, LCG) to which the logical channel belongs. In other words, the network device learns of an LCG to which each logical channel belongs.

For the RRC layer, a terminal device usually has three states: an RRC_CONNECTED state, an RRC_IDLE state, and an RRC_INACTIVE state. The following separately describes the three states.

### RRC_CONNECTED state

If an RRC connection is set up between the terminal device and the network device, the terminal device is in the RRC_CONNECTED state. In the RRC_CONNECTED state, the terminal device may set up a user plane connection and a control plane connection to the network device. The network device and the terminal device also store an access stratum (access stratum, AS) context of the terminal device. The network device can learn of a cell to which the terminal device belongs. The terminal device may receive data sent by the network device, and the terminal device may also send data to the network device. The terminal device may measure a channel between the terminal device and the network device, and may report a measurement result to the network device, and the network device may determine, based on a measurement result, whether to switch the cell to which the terminal device belongs. In other words, in the RRC_CONNECTED state, the terminal device and the network device can normally transmit data, and the network device can also manage the terminal device. If the terminal device in the RRC_CONNECTED state needs to send uplink data to the network device, the terminal device needs to keep synchronization with the network device based on a timing advance (timing advance, TA). If the terminal device in the RRC_CONNECTED state does not obtain uplink synchronization, the terminal device may initiate random access (random access, RA) to the network device. When a timing advance timer (timing advance timer, TAT) of the terminal device keeps running, the terminal device keeps uplink synchronization. When the TAT of the terminal device expires, the uplink synchronization of the terminal device is invalid. If the terminal device needs to send uplink data to the network device again, the terminal device needs to initiate the RA, and obtains a new TA through the RA.

### RRC_IDLE state

If no RRC connection is set up between the terminal device and the network device, the terminal device is in the RRC_IDLE state. When the terminal device is in the RRC_IDLE state, the terminal device may perform PLMN selection; the terminal device may receive a system message broadcast by the network device; the terminal device may perform cell reselection; and the terminal device may receive a paging message.

### RRC_INACTIVE state

After an RRC connection is set up between the terminal device and the network device, the terminal device enters the RRC_CONNECTED state. If the terminal device in the RRC_CONNECTED state and the network device do not have a data transmission requirement in a preset time period, the network device may determine that the terminal device enters the RRC_INACTIVE state, and the network device may send an RRC release with suspend indication (RRCRelease with suspend indication) message to the terminal device. After receiving the RRCRelease with suspend indication message, the terminal device retains a context of the terminal device, and enters the RRC_INACTIVE state.

Mutual transition of the foregoing three states at the RRC layer may be performed. As shown in FIG. 3, when the terminal device is in the RRC connected (RRC_CONNECTED) state, the network device may send an RRC release message to the terminal device. The terminal device may enter the RRC idle (RRC _IDLE) state after releasing an RRC resource between the terminal device and the network device. When the terminal device is in the RRC idle (RRC_IDLE) state, the terminal device may send an RRC setup request message to the network device, and the network device may set up the RRC connection to the terminal device based on the RRC setup request message, so that the terminal device may enter the RRC connected (RRC_CONNECTED) state. When the terminal device is in the RRC connected (RRC_CONNECTED) state, the network device may send the RRC release with suspend indication (RRCRelease with suspend indication) message to the terminal device. The terminal device enters the RRC inactive (RRC_INACTIVE) state after receiving the RRCRelease with suspend indication message. When the terminal device is in the RRC inactive (RRC_INACTIVE) state, if data transmission needs to be performed, the terminal device may send an RRC resume (resume) request message to the network device, and the network device may send an RRC resume response message to the terminal device. After receiving the resume response message, the terminal device may send an RRC resume complete message to the network device, and the terminal device enters the RRC_CONNECTED state, and resumes using of the context of the terminal device. It may be understood that, compared with a speed of entering the RRC_CONNECTED state from the RRC_IDLE state, a speed at which the terminal device enters the RRC_CONNECTED state from the RRC_INACTIVE state is faster. If the terminal device is in the RRC_INACTIVE state, the network device may send an RRC release message to the terminal device, and the terminal device may enter the RRC_IDLE state after releasing the RRC resource between the terminal device and the network device.

When the terminal device in the RRC_INACTIVE state needs to transmit data to the network device, the terminal device may send the RRC resume (resume) request message to the network device, and the network device may send the RRC resume response message to the terminal device. After receiving the RRC resume response message, the terminal device may send the RRC resume complete message to the network device, and the terminal device enters the RRC_CONNECTED state. In some scenarios, the data that the terminal device in the RRC_INACTIVE state needs to transmit to the network device is quite small, and the data is referred to as small data (small data). For example, the small data may include an instant message of an application (application, APP) of the terminal device, a heartbeat packet of the APP, or a push message of the APP. For another example, the small data may include periodic data of a wearable device, service data of an IoT device, and the like. Signaling overheads for the terminal device to enter the RRC_CONNECTED state from the RRC_INACTIVE state are even higher than overheads for transmitting the small data. Therefore, when the terminal device transmits the quite small data, overheads are excessively high.

In embodiments of this application, data whose size is less than a preset value may be referred to as the small data. For example, the preset value may be 500 bytes, 300 bytes, or the like. The network device and the terminal device may determine, based on a data label or a data type, whether data is the small data. Specifically, the network device and the terminal device may negotiate the data label or the data type based on a size of the data. For example, the data label may indentify big data or small data. For another example, data whose data type is the heartbeat packet, the instant message, or the periodic data is the small data, and data whose data type is a file, a video, or an audio is big data.

Usually, to resolve a problem of excessively high overheads caused by transmitting quite small data by the terminal device in the RRC_IDLE state or the RRC_INACTIVE state (which may be collectively referred to as the RRC non-connected state subsequently), the terminal device may not enter the RRC_CONNECTED state to transmit the small data. The terminal device may perform small data transmission (small data transmission, SDT) by using a principle of the random access (random access, RA). This is also referred to as RA-SDT. Alternatively, the terminal device may perform SDT by using a configured grant (configured grant, CG). This is also referred to as CG-SDT. The RA-SDT and the CG-SDT are described below.

### RA-SDT

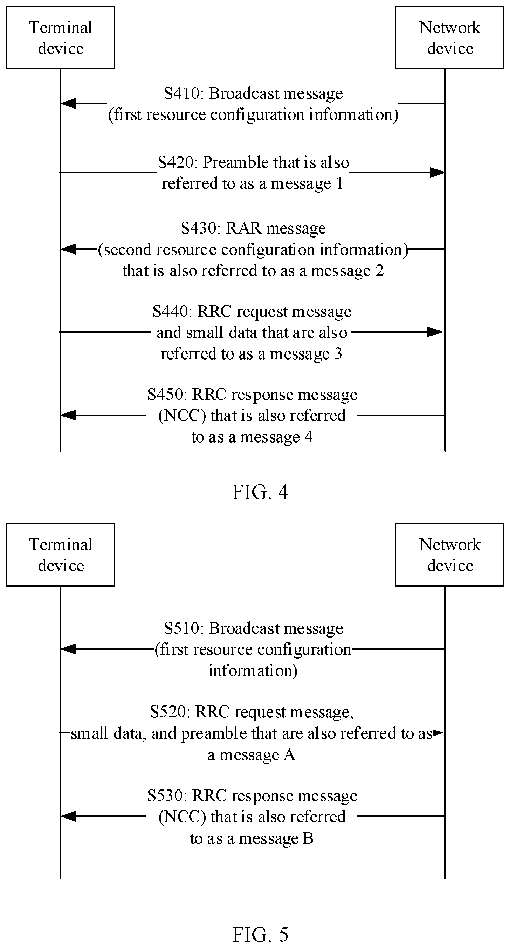

In a wireless communication system, before communicating with the network device, the terminal device first needs to initiate a random access process to obtain the uplink synchronization with the network device, or the terminal device initiates the random access in response to a paging message of the network device. The random access is classified into four-step random access (4-step RA) and two-step random access (2-step RA). Optionally, when contention-free random access (contention-free random access) is not configured for the terminal device, the terminal device may initiate the 4-step RA or the 2-step RA based on a comparison between a currently measured reference signal received power (reference signal received power, RSRP) and a preset RSRP threshold. For example, when the currently measured RSRP is greater than or equal to the preset RSRP threshold, the terminal device may initiate the 2-step RA. When the currently measured RSRP is less than the preset RSRP threshold, the terminal device may initiate the 4-step RA. Therefore, SDT may be performed by using a principle of the four-step random access or a principle of the two-step random access. As shown in FIG. 4, SDT is performed by using the principle of the four-step random access.

S410: A network device sends a broadcast message to a terminal device, where the broadcast message includes first resource configuration information, and the first resource configuration information indicates a random access resource.

The random access resource may also be referred to as an RA occasion.

Optionally, the first resource configuration information may further specifically indicate which random access resources are for initiating normal random access and which random access resources are for sending a message 1 in an RA-SDT process.

S420: The terminal device sends, based on the random access resource indicated by the first resource configuration information, a preamble (preamble) that is also referred to as the message 1, and the network device receives the preamble sent by the terminal device.

The preamble may be generated by the terminal device according to a specific rule, but the network device can identify the preamble generated by the terminal device.

In some embodiments, if the terminal device needs to perform SDT, the preamble in S420 may be different from a preamble used by the terminal device to initiate the normal random access rather than perform SDT. In other words, the network device may distinguish between intentions of the terminal device by using different preambles, for example, whether the intention of the terminal device is to perform SDT or to initiate the normal random access.

In some embodiments, if the first resource configuration information may further specifically indicate which random access resources are for initiating the normal random access and which random access resources are for sending the message 1 in the SDT process. The terminal device may send the message 1 in S420 on different random access resources based on different intentions. In this way, the network device may distinguish between intentions of the terminal device by using different preamble receiving resources, for example, whether the intention of the terminal device is to perform SDT or to initiate the normal random access.

In some other embodiments, the preamble in S420 may alternatively be the same as a preamble used by the terminal device to initiate the normal random access rather than perform SDT.

In some other embodiments, the random access resource for sending the preamble in S420 may alternatively be the same as a random access resource used by the terminal device to initiate the normal random access rather than perform SDT.

S430: In response to S420, the network device sends, to the terminal device, a random access response (random access response, RAR) message that is also referred to as a message 2.

The RAR message may include second resource configuration information. Optionally, the RAR message may further include at least one of a temporary cell radio network temporary identifier (temporary cell radio network temporary identifier, T-CRNTI) or a timing advance (timing advance, TA). The second resource configuration information indicates a resource used by the terminal device to send a message 3. The TA is used by the terminal device to learn of uplink synchronization.

S440: The terminal device sends, to the network device on the resource indicated by the second resource configuration information of the message 3, an RRC request message and small data that are also referred to as a message 3, where the RRC request message carries a user equipment contention resolution identity (UE Contention Resolution Identity).

The RRC request message may be different when the terminal device is in different RRC states and in different service scenarios. For example, the message 3 sent by the terminal device in an RRC_IDLE state (where optionally, in this case, the terminal device may store a context of the terminal device such as configuration information for obtaining a key for encrypting uplink small data) may include an RRC connection request (RRCConnectionRequest) message, an RRC connection resume request (RRCConnectionResumeRequest) message, an RRCEarlyDataRequest message, an RRCResumeRequest message, an RRC setup request (RRCSetupRequest) message, or another RRC message that has a same function but is not standardized in the 3rd generation partnership project (3rd generation partnership project, 3GPP). The message 3 sent by the terminal device in an RRC_INACTIVE state may also include the RRCConnectionRequest message, the RRCConnectionResumeRequest message, the RRCEarlyDataRequest message, the RRCResumeRequest message, the RRCSetupRequest message, or the another RRC message that has the same function but is not standardized in the 3 GPP.

When the terminal device performs RA-SDT by using the control plane protocol stack shown in FIG. 2B, the small data may be carried in the msg3, and is carried by using a signaling radio bearer (signaling radio bearer, SRB) and transmitted on a CCCH. For example, the small data may be carried in a non-access stratum (non-access stratum, NAS)-related IE (for example, a dedicated information NAS (dedicatedInfoNAS) IE) included in the RRCEarlyDataRequest message, and transmitted on the CCCH. When the terminal device performs RA-SDT by using the user plane protocol stack shown in FIG. 2A, the small data included in the message 3 is transmitted through the DTCH by using the user plane protocol stack at an upper layer of a MAC layer, and the RRC request message included in the message 3 is transmitted through the CCCH by using a control plane protocol stack at the upper layer of the MAC layer. The small data and the RRC request message may be encapsulated at the MAC layer, and sent to the network device by using a PHY layer.

In some other embodiments, if the preamble in S420 is the same as the preamble used by the terminal device to initiate the normal random access rather than perform SDT, or the random access resource for sending the preamble in S420 is the same as the random access resource for transmitting the preamble when the terminal device needs to initiate the normal random access rather than perform SDT, the RRC request message may carry intention information, where the intention information indicates an intention that the terminal device intends to initiate the SDT. In other words, in the message 3, the RRC request message may carry the intention of the terminal device, where the intention is initiating the SDT instead of initiating the normal random access.

S450: In response to S440, the network device sends an RRC response message to the terminal device, where the RRC response message includes a next hop chaining count (next hop chaining count, NCC). The NCC is used by the terminal device to determine a key for next time of SDT.

For example, the RRC response message may be an RRC release message. Different RRC request messages correspond to different RRC response messages.

In some embodiments, after S440, if the network device has downlink small data to be sent to the terminal device, S450 may include: In response to S440, the network device sends the RRC response message and the downlink small data to the terminal device.

In some embodiments, when the terminal device transmits the small data in S440 by using the control plane protocol stack shown in FIG. 2B, the network device may carry the downlink small data in the response message in S450. The downlink small data may be carried in the RRC response message and transmitted on the CCCH. For example, the RRC response message is an RRC early data complete (RRCEarlyDataComplete) message, and the downlink small data may be carried in a NAS-related IE included in the RRCEarlyDataComplete message, and transmitted on the CCCH.

In some embodiments, when the terminal device transmits the small data in S440 by using the user plane control protocol stack shown in FIG. 2A, S450 includes: The network device may send the RRC response message and the downlink small data to the terminal device, where the downlink small data may be transmitted on the DTCH, and is multiplexed at the MAC layer with the RRC response message transmitted on a DCCH.

In some embodiments, the network device identifies, based on the preamble sent by the terminal device, the resource for receiving the preamble, or the intention information carried in the RRC request message, that the terminal device intends to perform SDT transmission. Therefore, after the network device receives the RRC request message and the small data in S440, the network device determines that the terminal device performs SDT in S440. In this case, in S450, the RRC response message sent by the network device may further include the NCC for calculating the key for performing SDT by the terminal device next time.

In some embodiments, if the terminal device or the network device does not have a requirement of further transmitting data after S440, the RRC response message in S450 may further indicate to the terminal device that uplink small packet data is successfully transmitted, and indicate the terminal device to keep in a current RRC non-connected state. For example, the RRC response message is the RRCEarlyDataComplete message, an RRC connection release (RRCConnectionRelease) message, an RRC release (RRCRelease) message, or another RRC message that has a same function but is not standardized in the 3GPP. The terminal device may learn, based on the RRC response message, that the uplink small packet data is successfully transmitted.

In some embodiments, if the terminal device does not receive the RRC response message in S450, it is considered that the small data in S440 is not successfully transmitted. If the terminal device receives the RRC response message in S450, it is considered that the small data in S440 is successfully transmitted. In other words, the terminal device may determine, depending on whether the RRC response message is received, whether the small data in S440 is successfully transmitted.

In some embodiments, if the terminal device or the network device has a requirement of further transmitting data after S440, and the network device determines that entering of an RRC_CONNECTED state may be triggered, the RRC response message in S450 may indicate the terminal device to enter the RRC_CONNECTED state. For example, the RRC response message is an RRCConnectionSetup message, an RRC connection resume (RRCConnectionResume) message, an RRC setup (RRCSetup) message, an RRC resume (RRCResume) message, or another RRC message that has a same function but is not standardized in the 3GPP. The terminal device may learn, based on the RRC response message, that the small data in S440 is successfully transmitted. In other words, the terminal device may infer, based on the RRC response message indicating the terminal device to enter the RRC_CONNECTED state, that the network device successfully receives the small data in S440.

In some embodiments, the RRC response message indicates to the terminal device that uplink small packet data fails to be transmitted, and indicates the terminal device to keep in a current non-connected state. For example, the RRC response message is an RRC connection reject (RRCConnectionReject) message, an RRC reject (RRCReject) message, or another RRC message that has a same function but is not standardized in the 3GPP. The terminal device may learn, based on the RRC response message, that the uplink small data fails to be transmitted, and keeps in the current non-connected state based on the RRC response message.

As shown in FIG. 5, SDT is performed by using the principle of the two-step random access.

S510: A network device sends a broadcast message to a terminal device, where the broadcast message includes first resource configuration information, and the first resource configuration information indicates a random access resource.

The random access resource may also be referred to as an RA occasion.

For the random access resource indicated by the first resource configuration information, refer to the descriptions of S410.

S520: The terminal device sends, to the network device based on the random access resource indicated by the resource configuration information, a preamble (preamble), an RRC request message, and small data that are referred to as a message A.

The preamble may be generated by the terminal device according to a specific rule, but the network device can identify the preamble generated by the terminal device. For descriptions of the preamble and the random access resource for sending the preamble, refer to the descriptions of S420.

The RRC request message may be different when the terminal device is in different RRC states and in different service scenarios. For details, refer to the descriptions related to the RRC request message in S440 in FIG. 4. Details are not described herein again.

When the terminal device performs RA-SDT by using the control plane protocol stack in FIG. 2B, the terminal device sends the preamble, the RRC request message, and the small data. The small data may be carried in a message 3, and is carried by using an SRB and transmitted on a CCCH. For example, the small data may be carried in a non-access stratum (non-access stratum, NAS)-related IE (for example, a dedicated information NAS (dedicatedInfoNAS) IE) included in an RRCEarlyDataRequest message, and transmitted on the CCCH.

When the terminal device performs RA-SDT by using the user plane protocol stack in FIG. 2A, the terminal device sends the preamble, the RRC request message, and the small data. The small data and the preamble are transmitted through a DTCH by using the user plane protocol stack at an upper layer of a MAC layer, and the RRC request message is transmitted through a CCCH by using a control plane protocol stack at the upper layer of the MAC layer. The small data, the RRC request message, and the preamble may be encapsulated at the MAC layer, and sent to the network device by using a PHY layer.

In some other embodiments, if the preamble in S520 is the same as a preamble used by the terminal device to initiate normal random access rather than perform SDT, or the random access resource for sending the preamble in S520 is the same as a random access resource for transmitting the preamble when the terminal device needs to initiate the normal random access rather than perform SDT, the RRC request message in S520 may carry intention information, where the intention information indicates an intention that the terminal device intends to initiate the SDT. In other words, in the message A, the RRC request message may carry the intention of the terminal device, where the intention is initiating the SDT instead of initiating the normal random access.

S530: The network device sends an RRC response message to the terminal device, where the RRC response message carries an NCC (Next hop Chaining Count, next hop chaining count) for encrypting the small data. The RRC response message is also referred to as a message B.

For example, the RRC response message may be an RRC release message. For example, the RRC response message may correspond to the RRC request message in S520. Different RRC request messages correspond to different RRC response messages.

It should be noted that, after the terminal device receives the RRC response message in S530, the terminal device may still be in an RRC non-connected state, or may enter an RRC connected state.

In some embodiments, before S530, if the network device has downlink small data to be sent to the terminal device, the network device may send the downlink small data to the terminal device. For a specific manner of sending the downlink small data, refer to the descriptions of S450 in FIG. 4.

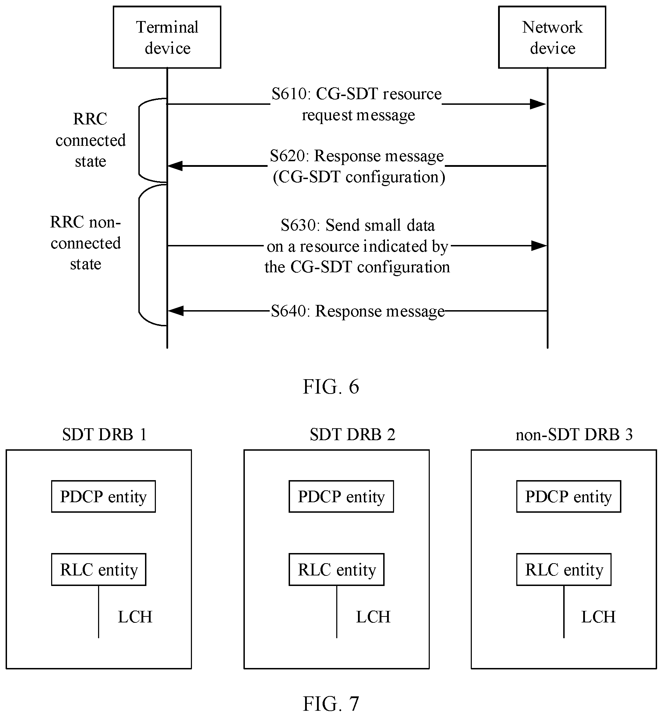

The RA-SDT is described above, and the CG-SDT is described below with reference to FIG. 6.

S610: A terminal device in an RRC_CONNECTED state sends a CG-SDT resource request message to a network device, where the CG-SDT resource request message requests a CG-SDT configuration from the network device.

Optionally, the terminal device in the RRC_CONNECTED state may send the CG-SDT resource request message to the network device at any moment. Alternatively, the terminal device in the RRC_CONNECTED state may determine that there may be small data in the future, and may send the CG-SDT resource request message to the network device. Alternatively, the terminal device is in the RRC_CONNECTED state, the terminal device and the network device do not have a data transmission requirement in a preset time period, and the terminal device determines that the terminal device may be about to enter a non-connected state. To transmit small data in the non-connected state, the terminal device may send the CG-SDT resource request message to the network device.

S620: The network device sends a response message for the CG-SDT resource request message to the terminal device, where the response message carries the CG-SDT configuration.

The CG-SDT configuration indicates a time-frequency position and a resource periodicity of a resource used by the terminal device to transmit the small data. In other words, when the terminal device is in the RRC_CONNECTED state, the network device may preconfigure, for the terminal device, a resource for performing CG-SDT. When the terminal device enters the RRC non-connected state, the terminal device may perform CG-SDT by using the resource preconfigured by the network device when the terminal device is in the RRC_CONNECTED state. In this way, a transmission delay can be reduced, dynamic resource scheduling is not needed, and signaling overheads can also be reduced.

Optionally, the CG-SDT configuration may further indicate to the terminal device a data radio bearer (data radio bearer, DRB) for performing SDT, or may further indicate, to the terminal device, the DRB for performing SDT and a DRB that cannot be for performing SDT. SDT may be performed only on the DRB indicated by the CG-SDT configuration, and the terminal device cannot perform SDT on a DRB that is not indicated by the CG-SDT configuration. For example, as shown in FIG. 7, the CG-SDT configuration indicates that the terminal device may perform SDT on a DRB 1 and a DRB 2. The CG-SDT configuration does not indicate a DRB 3, or the CG-SDT indicates that SDT cannot be performed on the DRB 3. Therefore, the terminal device may perform SDT by using the CG-SDT configuration only on the DRB 1 and the DRB 2, and cannot perform SDT by using the CG-SDT configuration on the DRB 3. For another example, a CG-SDT configuration 1 indicates that the terminal device may perform SDT on a DRB 1, a CG-SDT configuration 2 indicates that the terminal device may perform SDT on a DRB 2, and a CG-SDT configuration 3 indicates that the terminal device cannot perform SDT on a DRB 3. In this case, the terminal device may perform SDT by using the CG-SDT configuration 1 on the DRB 1, but cannot perform SDT by using the CG-SDT configuration 2 on the DRB 1; the terminal device may perform SDT by using the CG-SDT configuration 2 on the DRB 2, but cannot perform SDT by using the CG-SDT configuration 1 on the DRB 2; and the terminal device does not perform SDT on the DRB 3.

As shown in FIG. 7, one DRB corresponds to one PDCP entity, one RLC entity, and one logical channel (logical channel, LCH), where the LCH is between an RLC layer and a MAC layer. The logical channel corresponds to the DRB.

Optionally, if the terminal device in the RRC_CONNECTED state sends the CG-SDT resource request message to the network device at the any moment, or the terminal device determines that there is small data in the future and sends the CG-SDT resource request message to the network device, the response message that is for the CG-SDT resource request message and that is sent by the network device to the terminal device may be an RRC reconfiguration message, and the RRC reconfiguration message carries the CG-SDT configuration.

Optionally, if the network device determines that the terminal device needs to enter an RRC_INACTIVE state, the response message in S620 may be an RRC release with suspend indication (RRCRelease with suspend indication) message, and the RRC release with suspend indication message includes the CG-SDT configuration. After receiving the RRC release with suspend indication message, the terminal device enters the RRC_INACTIVE state.

Optionally, if the network device determines that the terminal device needs to enter an RRC_IDLE state, the response message in S620 may be an RRC release without suspend indication message, and the RRC release message includes the CG-SDT configuration. After receiving the RRC release message, the terminal device enters the RRC_IDLE state. For example, the CG-SDT resource request message in S610 may be a preconfigured uplink resource configuration request (preconfigured uplink resource Configuration Request, *PURConfigurationRequest*) message, and the response message in S620 may be an RRCConnectionRelease message. In this case, the CG-SDT configuration in the RRCConnectionRelease message may be PUR configuration information or PUR release indication information.

After S620, the terminal device enters the RRC non-connected state, and performs S630 when the terminal device needs to transmit the small data.

S630: The terminal device sends the small data to the network device on the resource indicated by the CG-SDT configuration.

Optionally, the resource indicated by the CG-SDT configuration is preconfigured by the network device for the terminal device. When the small data arrives at the terminal device within a valid TA, that is, a TAT is running, the terminal device may perform SDT by using the resource indicated by the CG-SDT configuration. Optionally, in a process of performing CG-SDT, the terminal device may send only the small data, or may send both the small data and an RRC request message. For example, if the resource indicated by the CG-SDT configuration is a unique resource configured by the network device for the terminal device and is not a shared resource, the terminal device may send, in the process of performing CG-SDT, only the small data on the resource indicated by the CG-SDT configuration. In this way, the network device may identify, based on the resource for receiving the small data, the terminal device that sends the small data. For another example, if the resource indicated by the CG-SDT configuration is a shared resource configured by the network device for a plurality of terminal devices, the terminal device may send, in the process of performing the SDT, the small data and the RRC request message on the resource indicated by the CG-SDT configuration. In this way, the network device may identify the terminal devices by using the RRC message.

The RRC request message may be different when the terminal device is in different RRC states. For example, the RRC request message sent by the terminal device in the RRC_IDLE state (where in this case, the terminal device may store a context of the terminal device such as the CG-SDT configuration) may include an RRC connection request (RRCConnectionRequest) message, an RRCEarlyDataRequest message, an RRC setup request (RRCSetupRequest) message, or another RRC message that has a same function but is not standardized in the 3rd generation partnership project (3rd generation partnership project, 3GPP). The RRC request message sent by the terminal device in the RRC_INACTIVE state (where in this case, the terminal device may store the context of the terminal device such as configuration information for obtaining a key for encrypting uplink small data) may include an RRCConnectionResumeRequest message, an RRCResumeRequest message, or another RRC message that has the same function but is not standardized in the 3GPP.

When the terminal device performs SA-SDT by using the control plane protocol stack shown in FIG. 2B, the small data may be carried in the RRC request message, and is carried by using an SRB and transmitted on a CCCH. For example, the small data may be carried in a non-access stratum (non-access stratum, NAS)-related IE (for example, a dedicated information NAS (dedicatedInfoNAS) IE) included in the RRCEarlyDataRequest message, and transmitted on the CCCH.

When the terminal device performs CG-SDT by using the user plane protocol stack shown in FIG. 2A, small data is transmitted through a DTCH by using the user plane protocol stack at an upper layer of the MAC layer, and the RRC request message is transmitted through a CCCH by using a control plane protocol stack at the upper layer of the MAC layer. The small data and the RRC request message may be encapsulated at the MAC layer, and sent to the network device by using a PHY layer.

S640: The network device sends a response message to the terminal device.

The response message in S640 may be an RRC response message. After receiving the response message, the terminal device may determine that the network device receives the small data in S630, and the terminal device keeps in the RRC non-connected state.

Optionally, if the response message in S640 is the RRC response message, the RRC response message may also include a CG-SDT configuration. In other words, the CG-SDT configuration in S620 is used by the terminal device to transmit the small data in S630, and the CG-SDT configuration in S640 is used by the terminal device to transmit small data next time.

Optionally, if the response message in S640 is the RRC response message, the RRC response message is similar to the response message in S450, and the terminal device may also enter the RRC connected state based on the RRC response message.

The CG-SDT and the RA-SDT are described above. The terminal device may transmit the small data by using the CG-SDT and the RA-SDT. The CG-SDT and RA-SDT are applicable to different application scenarios.

For example, in the process in which the terminal device performs SDT, the resource indicated by the CG-SDT configuration is configured by the network device in a cell in which the terminal device is located. Therefore, the resource indicated by the CG-SDT configuration is applicable to the terminal device in the cell covered by the network device. If the terminal device moves to coverage of another network device, the resource indicated by the CG-SDT configuration is no longer applicable. In the field of an internet of things (internet of things, IoT), mobility of a terminal device is limited, and a cell of the terminal device is basically fixed and does not change greatly. Therefore, the terminal device in the field of the IoT may preferentially use the CG-SDT. A terminal device with higher mobility, for example, a smartphone, may move from coverage of a network device to coverage of another network device. If the terminal device performs, in the coverage that is of the network device and to which the terminal device moves, SDT by using a resource indicated by a CG-SDT configuration sent by the network device that is before the movement, data cannot be transmitted. A resource for the message 1 or the message A in the RA-SDT is broadcast by the network device in real time. Therefore, the terminal device with the higher mobility may preferentially use the RA-SDT. Certainly, whether the terminal device uses the CG-SDT or the RA-SDT may alternatively not be limited by a scenario, and a manner of performing SDT may be determined based on implementation of the terminal device.

For example, because the resource for performing CG-SDT is specially configured by the network device for the terminal device, a success rate of performing SDT by the terminal device is high. The random access resource for the RA-SDT is broadcast by the network device, and all terminal devices that can receive the broadcast message may initiate the RA-SDT on the random access resource. A plurality of terminal devices contend for the resource. This may cause a contention failure. Therefore, a success rate of the RA-SDT is lower than the success rate of the CG-SDT, and the CG-SDT may be more valid than the RA-SDT. Usually, the terminal device preferentially selects the CG-SDT, and the terminal device also needs to satisfy a specific condition to select the CG-SDT. If the condition is not satisfied, the terminal device may select the RA-SDT. For example, whether there is, on a normal uplink (normal uplink, NUL) carrier or a supplementary uplink (supplementary uplink, SUL) carrier that the terminal device currently uses, the resource indicated by the CG-SDT configuration is determined. If there is the resource indicated by the CG-SDT configuration and there is a valid resource in the resource indicated by the CG-SDT configuration, the terminal device may select the CG-SDT; otherwise, the terminal device selects the RA-SDT.

For ease of description, the resource indicated by the CG-SDT configuration is referred to as a CG resource for short below.

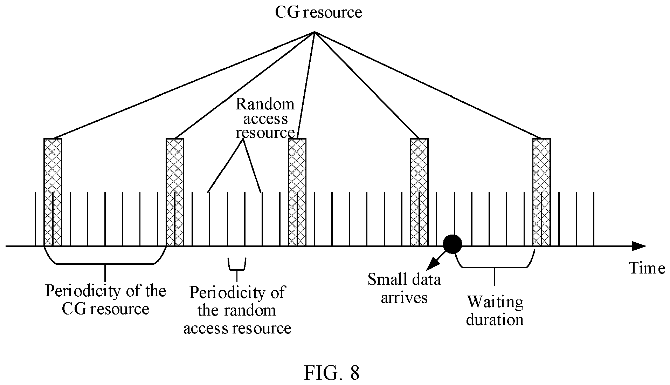

Generally, in the CG-SDT, a periodicity of the CG resource is longer; and in the RA-SDT, a periodicity of the random access resource indicated by the resource configuration information in S410 and S510 is shorter. FIG. 8 is a schematic diagram of the CG resource and the random access resource indicated by the resource configuration information in S410 and S510. The CG resource is in a bar shape in FIG. 8, and the random access resource is in a line shape. A time interval between two adjacent CG resources is far greater than a time interval between two adjacent random access resources. In other words, the periodicity of the CG resource is greater than the periodicity of the random access resource. If a moment at which the small data arrives is after the fourth CG resource, and a solid circle in the figure is the moment at which the small data arrives, SDT can be performed only on the fifth CG resource, and specific time needs to be waited. If a delay requirement of the small data is high, SDT performed by the terminal device does not satisfy the delay requirement of the small data.

In view of the foregoing problem, embodiments of this application provide a small data transmission method. A terminal device may determine, based on first duration and an arrival moment of small data, whether to use CG-SDT or RA-SDT. Specifically, the terminal device starts a timer at a start moment of each CG resource, and duration of the timer is the first duration. If the small data arrives when the timer is running, it indicates that the arrival moment is still farther from a next CG resource. If the next CG resource is used to transmit the small data, a delay is excessively long. Therefore, the RA-SDT may be used. If the small data arrives after running of the timer ends, it indicates that the arrival moment is closer to a next CG resource. The next CG resource may be used to transmit the small data. This can also satisfy a delay requirement.

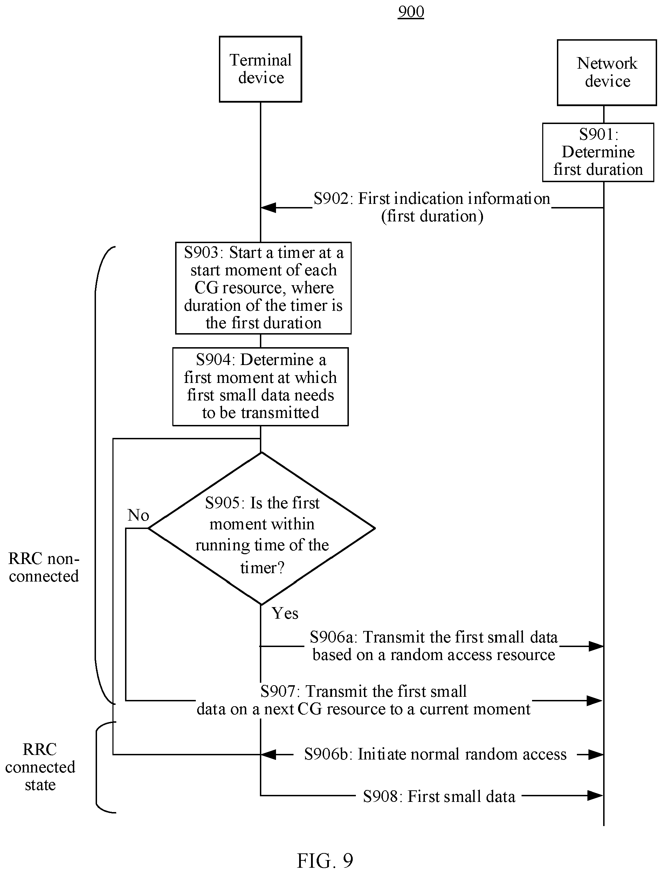

The following describes a small data transmission method 900 according to an embodiment of this application with reference to accompanying drawings. As shown in FIG. 9, the method 900 includes the following steps.

S901: A network device determines first duration.

Optionally, the first duration may be configured by the network device for a terminal device, configured by the network device for a service of the terminal device, or configured by the network device for a logical channel or a DRB of the terminal device. The following describes three cases:
Case A: The network device configures one first duration for the terminal device.

For example, the first duration is related to an initial-transmission success rate or a retransmission duration of the terminal device. Specifically, the network device may determine the first duration based on the initial-transmission success rate or the retransmission duration of the terminal device in historical data. A lower initial-transmission success rate of the terminal device indicates longer first duration. A higher initial-transmission success rate of the terminal device indicates a shorter first duration. Longer retransmission duration of the terminal device indicates longer first duration. Shorter retransmission duration of the terminal device indicates shorter first duration.

Case B: The network device configures one first duration for one service of the terminal device, and first durations corresponding to different services may be the same or different.

The network device may configure different durations for services having different delay requirements, and the network device may determine a delay requirement of the service based on historical data of the service. The first duration is related to a delay requirement of a service corresponding to first small data. For example, a higher delay requirement of the service corresponding to the first small data indicates longer first duration. For another example, a lower delay requirement of the service corresponding to the first small data indicates shorter first duration. For example, the network device may determine the delay requirement of the service based on quality of service (quality of service, QoS) of the service. For example, the network device may determine the delay requirement of the service based on a packet delay budget (packet delay budget, PDB) of the historical data.

Case C: The network device configures one first duration for one logical channel or one DRB of the terminal device, and first durations corresponding to different logical channels or different DRBs may be the same or different.

Because there is a correspondence between a service and the logical channel/the DRB, delay requirements of different logical channels/DRBs may be the same or different. The network device may determine, based on QoS corresponding to the logical channel/the DRB, a delay requirement of the service corresponding to the DRB. For example, the network device may determine the delay requirement of the service based on a PDB corresponding to the DRB. For example, a higher delay requirement of a service corresponding to first small data indicates longer first duration. For another example, a lower delay requirement of a service corresponding to first small data indicates shorter first duration. For example, the network device may configure two durations for 10 logical channels of the terminal device, where five logical channels correspond to one duration, and the other five logical channels correspond to one duration. For another example, the network device may configure 10 durations for 10 logical channels of the terminal device, where one logical channel corresponds to one duration, and durations of different logical channels may be the same or different.

It may be understood that a relationship between the service, the DRB, and the logical channel is as follows: The network device may allocate at least one service having similar service features to a same QoS flow (QoS Flow), where each QoS flow is identified by a QoS flow ID of the QoS flow. One DRB may correspond to one or more QoS flow IDs. The DRB includes one PDCP entity, one RLC entity, and one logical channel. In other words, the DRB is in a one-to-one correspondence with the logical channel.

For example, if a periodicity of a CG resource is T, and the delay requirement of the service corresponding to the first small data is Q, the first duration is greater than or equal to T-Q.

In other words, the network device configures one first duration in a unit of the terminal device. Alternatively, the network device configures the duration in a unit of the service, and configures the different durations for the services having the different delay requirements. Alternatively, the network device configures the duration in a unit of the logical channel or the DRB. How to configure the duration is not limited in this embodiment of this application.

It is described in the foregoing three cases that the first duration corresponds to the terminal device, the first duration corresponds to one service of the terminal device, and the first duration corresponds to one logical channel or one DRB of the terminal device. Similarly, the CG-SDT configuration in FIG. 6 may correspond to the terminal device, correspond to the service of the terminal device, or correspond to the logical channel or the DRB of the terminal device. The following describes a relationship between both the CG-SDT configuration and the first duration and the terminal device, the service of the terminal device, and the logical channel or the DRB of the terminal device. The following provides descriptions in different cases:
Case 1: The network device configures the first duration based on Case A, Case B, or Case C above, and configures one CG-SDT configuration for the terminal device. That is, the first duration may be configured based on the terminal device, the service, or the logical channel or the DRB, but the CG-SDT configuration may be configured based on the terminal device.

In other words, in Case 1, the network device may configure the first duration in any manner in Case A, Case B, or Case C, and the CG-SDT configuration needs to be configured based on the terminal device, so that configuration flexibility can be improved.

Case 2: The network device may configure one CG-SDT configuration for the terminal device, configure the CG-SDT configuration for the service of the terminal device, or configure the CG-SDT configuration for the logical channel or the DRB of the terminal device, and configure one first duration for the terminal device. That is, the CG-SDT configuration may be configured based on the terminal device, the service, or the logical channel or the DRB, but the first duration may be configured based on the terminal device.

In other words, in Case 2, a manner of configuring the CG-SDT configuration is not limited, and the first duration needs to be configured based on the terminal device, so that configuration flexibility can be improved.

Case 3: The network device configures one first duration and one CG-SDT configuration for the terminal device. That is, the terminal device corresponds to the first duration and the CG-SDT configuration.

Optionally, the network device may send, to the terminal device via the response message in S620, the CG-SDT configuration and the first duration that are configured for the terminal device.

Case 4: The network device configures one first duration and one CG-SDT configuration for the service of the terminal device. That is, the service of the terminal device corresponds to the first duration and the CG-SDT configuration.

Optionally, the network device may send, to the terminal device via the response message in S620, the CG-SDT configuration and the first duration that are configured for the service of the terminal device.

Case 5: The network device configures one first duration and one CG-SDT configuration for the DRB or the logical channel of the terminal device. That is, the logical channel or the DRB of the terminal device corresponds to the first duration and the CG-SDT configuration.

Optionally, the network device may send, to the terminal device via the response message in S620, the CG-SDT configuration and the first duration that are configured for the logical channel or the DRB of the terminal device.

In other words, a manner of configuring the first duration and the CG-SDT configuration is not limited in this embodiment of this application.

S902: The network device sends first indication information to the terminal device, and the terminal device receives the first indication information, where the first indication information indicates the first duration.

Optionally, if the first duration is configured by the network device for the service of the terminal device, the first indication information specifically indicates a correspondence between the service and the first duration (for Case B in S901); or if the first duration is configured by the network device for the logical channel or the DRB of the terminal device (for Case C in S901), the first indication information specifically indicates a correspondence between the logical channel or the DRB and the first duration. In other words, the first indication information needs to indicate whether the first duration is duration corresponding to the service or duration corresponding to the logical channel or the DRB, and specifically indicate a specific service corresponding to the first duration, or a specific logical channel or a specific DRB corresponding to the first duration.

Optionally, the terminal device is in an RRC connected state. That is, when the terminal device is in the RRC connected state, the network device may send the first indication information to the terminal device. Certainly, when the terminal device is in an RRC non-connected state, the network device may also send the first indication information to the terminal device.

Optionally, when the terminal device is in the RRC connected state, the terminal device may receive the CG-SDT configuration in S620 shown in FIG. 6. The CG-SDT configuration in S620 in FIG. 6 may include the first indication information. Optionally, when the terminal device is in the RRC non-connected state, the terminal device may also receive the CG-SDT configuration. For example, the response message in S640 may carry the CG-SDT configuration, and the CG-SDT configuration may include the first indication information. That is, the CG-SDT configuration may indicate a time-frequency position and a resource periodicity of the CG resource used by the terminal device to transmit small data, and may also indicate the first duration. In other words, the CG-SDT configuration is bound to the first duration. For example, for Case 3 in S901, the CG-SDT configuration and the first duration may be configured by the network device for the terminal device. For another example, for Case 4 in S901, the CG-SDT configuration and the first duration may be configured by the network device for the service of the terminal device. For still another example, for Case 5 in S901, the CG-SDT configuration and the first duration may be configured by the network device for the logical channel or the DRB of the terminal device.

Optionally, the network device may send the first indication information to the terminal device via the response message in S620 or the response message in S640. In this case, a manner in which the network device sends the CG-SDT configuration is not limited.

Optionally, when the terminal device is in the RRC connected state, the network device may carry the first indication information in any message sent to the terminal device. For example, an RRCReconfiguration (RRC reconfiguration) message may carry the first indication information. In this case, a manner in which the network device sends the CG-SDT configuration is not limited.

Optionally, the first indication information may directly indicate the first duration or indirectly indicate the first duration. For example, the first indication information may directly indicate that the first duration is 0.5 ms, or indicate, by using an index value 1, that the first duration is 0.5 ms. Alternatively, there may be a correspondence between the first duration and a parameter configured by the network device for the terminal device. For example, the CG-SDT configuration sent by the network device to the terminal device indicates the resource periodicity of the CG resource for transmitting the small data. There is a correspondence between the resource periodicity and the first duration. The correspondence may be specified in a protocol. The terminal device may determine the first duration based on the resource periodicity. In other words, in this embodiment of this application, a manner in which the network device indicates the first duration is not limited.

Optionally, a unit of the first duration may be millisecond (ms), a frame, a subframe, a slot, or the like. The unit of the first duration is not limited in this embodiment of this application.

Optionally, S901 and S902 may not exist in the method 900. The terminal device may determine the first duration based on a service feature of the terminal device. For example, there are four optional values of the first duration: 0.5 ms, 1 ms, 1.5 ms, and 2 ms. The terminal device may select one of the four values as the first duration based on the service feature of the terminal device. For example, for a service having a higher delay requirement, the terminal device may select 2 ms as the first duration. For a service having a lower delay requirement, the terminal device may select 0.5 ms as the first duration.

After S902, the terminal device enters the RRC non-connected state. After entering the RRC non-connected state, the terminal device performs S903.

S903: The terminal device starts a timer at a start moment of each CG resource, where duration of the timer is the first duration.

An interval between two adjacent CG resources is the periodicity of the CG resource, and the first duration is less than the periodicity of the CG resource. The CG-SDT configuration shown in FIG. 6 may be for configuring the time-frequency position and the periodicity of the CG resource.

Optionally, if the first duration is configured by the network device for the terminal device, the terminal device starts the timer at the start moment of each CG resource, and the network device may configure one or more CG-SDT configurations for the terminal device. In other words, the terminal device may start the timer at a start moment of each CG resource indicated by one CG-SDT configuration. That is, the CG-SDT configuration shown in FIG. 6 indicates a CG resource of the terminal device.

Optionally, if the first duration is configured by the network device for one service of the terminal device, the terminal device starts the timer at a start moment of each CG resource corresponding to the service. That is, the CG-SDT configuration shown in FIG. 6 indicates a CG resource of the service of the terminal device. Different services may correspond to different CG-SDT configurations, different services may correspond to a same CG-SDT configuration, or a same service may correspond to different CG-SDT configurations. The network device may send at least one CG-SDT configuration of a plurality of services to the terminal device, where one CG-SDT configuration corresponds to one service, or one CG-SDT configuration corresponds to a plurality of services.

Optionally, if the first duration is configured by the network device for one logical channel or one DRB of the terminal device, the terminal device starts the timer at a start moment of each CG resource corresponding to the logical channel or the DRB. That is, the CG-SDT configuration shown in FIG. 6 indicates a CG resource corresponding to the logical channel or the DRB. Different logical channels may correspond to different CG-SDT configurations, different logical channels may correspond to a same CG-SDT configuration, or a same logical channel may correspond to different CG-SDT configurations. The network device may send at least one CG-SDT configuration of a plurality of logical channels or a plurality of DRBs to the terminal device, where one CG-SDT configuration corresponds to one logical channel or one DRB, or one CG-SDT configuration may correspond to a plurality of logical channels or a plurality of DRBs.

In other words, the network device may configure the first duration in the unit of the terminal device, the network device may configure the duration in the unit of the service, the network device may configure the duration in the unit of the logical channel, or the network device may configure the duration in the unit of the DRB. How to configure the duration is not limited in this embodiment of this application.

S904: The terminal device determines a first moment at which the first small data needs to be transmitted.

Optionally, the first moment may alternatively be a moment at which the first small data needs to be transmitted, a moment at which the terminal device receives the first small data, or an arrival moment of the first small data.

Optionally, after S904, the method further includes: The terminal device determines whether a size of the first small data is less than a first data threshold. If the size of the first small data is less than the first data threshold, S905 is performed. Otherwise, the terminal device needs to enter the RRC_CONNECTED state to transmit the data, and S906b is performed.

Optionally, the method further includes: The terminal device determines whether a current reference signal received power (reference signal received power, RSRP) is greater than a first RSRP threshold. If the current reference signal received power is greater than the first RSRP threshold, S905 is performed. Otherwise, the procedure is ended. In other words, if the current RSRP of the terminal device is greater than the first RSRP threshold, it indicates that the terminal device is close to the network device, signal quality is good, and the small data may be transmitted.

Optionally, if the current RSRP of the terminal device is less than or equal to the first RSRP threshold, the procedure is not ended, and S906b is proceeded to.

It may be understood that a relationship between S903 or S904 and that the terminal device compares the current RSRP with the first RSRP threshold may not be limited, and the terminal device may compare the current RSRP with the first RSRP threshold before or after S903 or S904, or the comparison and S903 or S904 may be performed simultaneously.

Optionally, after S904, the method further includes: The terminal device determines whether a size of the first small data is less than a first data threshold and whether a current RSRP is greater than a first RSRP threshold. If the size of the first small data is less than the first data threshold, and the current RSRP is greater than the first RSRP threshold, S905 is performed. If the size of the first small data is greater than or equal to the first data threshold, the terminal device needs to enter the RRC_CONNECTED state to transmit the data, and S906b is performed. If the current RSRP is less than the first RSRP threshold, the procedure is ended, or S906b may be performed.

Optionally, the terminal device in the RRC non-connected state may receive a broadcast message sent by the network device, where the broadcast message includes the first data threshold and/or the first RSRP threshold. Alternatively, the terminal device in the RRC_CONNECTED state may receive the RRC reconfiguration message sent by the network device, where the RRC reconfiguration message includes the first data threshold and/or the first RSRP threshold. Alternatively, the CG-SDT configuration shown in FIG. 6 may also indicate the first data threshold and/or the first RSRP threshold. How the terminal device obtains the first data threshold and/or the first RSRP threshold is not limited in this embodiment of this application.

It may be understood that, similar to the first duration, the first small data may be data of the terminal device, data corresponding to the service of the terminal device, or data corresponding to the logical channel or the DRB of the terminal device.

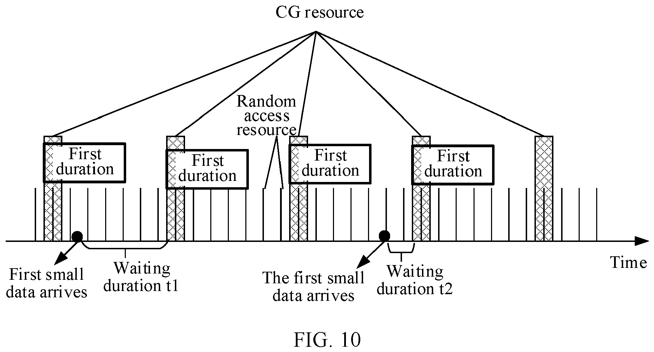

It may be understood that, if the first moment is after a start moment of one CG resource and before an end moment of the CG resource, the terminal device may also attempt to send the first small data on the CG resource. If the sending fails, S905 is performed. Alternatively, the first small data is not sent on the CG resource, and S905 is directly performed. In other words, if the arrival moment of the first small data falls within a time range of the CG resource exactly, the first small data may alternatively be sent by using the CG resource. If the sending fails, the method in this embodiment of this application is performed. Alternatively, the method in this embodiment of this application is directly performed. For example, as shown in FIG. 10, if the arrival moment of the first small data falls within a range of the first CG resource, the terminal device may attempt to send the first small data on the first CG resource, or may perform S905 rather than send the first small data on the CG resource.

Optionally, S903 and S905 may not exist in the method 900. In other words, the method 900 may not include descriptions of whether to start the timer. After S904, the terminal device determines that the arrival moment of the first small data is the first moment, and the terminal device determines a distance between a previous CG resource and the first moment. If the distance between the previous CG resource and the first moment is less than or equal to the first duration, it indicates that the first moment is farther from a next CG resource, and S906a is performed. If the distance between the previous CG resource and the first moment is greater than the first duration, it indicates that the first moment is closer to a next CG resource, and S907 is performed.

S905: The terminal device determines whether the first moment is within running time of the timer. If the first moment is within the running time of the timer, S906a is performed. Otherwise, S907 is performed.

S906a: The terminal device transmits the first small data based on a random access resource.

That the terminal device transmits the first small data based on a random access resource may be understood as that the terminal device performs RA-SDT to transmit the first small data.

Specifically, the terminal device sends a message 1 or a message A on the random access resource indicated by the resource configuration information in S410 or S510. For the fourstep random access in FIG. 4, the terminal device may send the message 1 on the random access resource indicated by the resource configuration information in S410, and send the first small data in the message 3. For the two-step random access in FIG. 5, the terminal device may send the message A on random access resource indicated by the resource configuration information in S510, where the message A includes the first small data.

Optionally, the random access resource selected by the terminal device may be a resource that is close to the first moment within the running time of the timer.

S907: The terminal device transmits the first small data on a next CG resource to a current moment.

To better describe S905 to S907, the following uses an example for description with reference to FIG. 10. The terminal device starts the timer at a start moment of the first CG resource, and duration of the timer is the first duration. If the first small data arrives between the first CG resource and the second CG resource, running of the timer has not ended at the arrival moment of the first small data. As shown in FIG. 10, if the terminal device needs to transmit the first small data on the second CG resource, waiting duration is t1. If a delay requirement of the first small data is high, but the waiting duration is excessively long, the delay requirement of the first small data is not satisfied. Therefore, the terminal device may perform RA-SDT, and select the random access resource to send the message 1 or the message A, to complete transmission of the first small data. If the first small data arrives between the third CG resource and the fourth CG resource, and running of the timer has ended at the arrival moment of the first small data. As shown in FIG. 10, if the terminal device needs to transmit the first small data on the fourth CG resource, waiting duration is t2. If a delay requirement of the first small data is high, and t2 is short, the delay requirement of the first small data may be satisfied. Therefore, the first small data may be transmitted by using the fourth CG resource.

S906b: The terminal device initiates normal random access, and the terminal device enters the RRC connected state.

After S906b, the method 900 includes S908.

S908: The terminal device transmits the first small data in the RRC connected state.

Optionally, if no random access resource is configured by using the broadcast message sent by the network device, for example, the first resource configuration information is not carried in S410 or S510, it indicates that the terminal device and the network device do not support the RA-SDT. In this case, S906a does not need to be performed, and S906b is directly performed. In other words, if the terminal device needs to fall back from CG-SDT to the RA-SDT according to this embodiment of this application, the terminal device can fall back to the RA-SDT only when both the terminal device and the network device support the RA-SDT. Otherwise, the terminal device needs to initiate a normal random access procedure, and enter the RCC connected state from the RRC non-connected state, to transmit the first small data.

Optionally, if no random access resource is configured by using the broadcast message sent by the network device, for example, the first resource configuration information is not carried in S410 or S510, it indicates that the terminal device and the network device do not support the RA-SDT, a data volume of the first small data is greater than or equal to a second data threshold, or the current RSRP of the terminal device is less than a second RSRP threshold. In this case, S906a does not need to be performed, and S906b is directly performed. In other words, if the terminal device needs to fall back from CG-SDT to the RA-SDT according to this embodiment of this application, the terminal device may fall back to the RA-SDT only when both the terminal device and the network device support the RA-SDT and the terminal device satisfies a condition for performing RA-SDT. Otherwise, the terminal device needs to initiate a normal random access procedure, and enter the RCC connected state from the RRC non-connected state, to transmit the first small data.

Optionally, the terminal device in the RRC non-connected state may receive the broadcast message sent by the network device, where the broadcast message includes the second data threshold and/or the second RSRP threshold. How the terminal device obtains the second data threshold and/or the second RSRP threshold is not limited in this embodiment of this application.

It may be understood that the first data threshold and the first RSRP threshold may be understood as being for determining whether a condition for performing CG-SDT is satisfied. The second data threshold and the second RSRP threshold may be understood as being for determining whether the condition for performing RA-SDT is satisfied. The first data threshold and the second data threshold may be the same or different. The first RSRP threshold and the second RSRP threshold may be the same or different.

In the foregoing solution, the terminal device may determine, depending on whether the timer is running at the arrival moment of the first small data, whether to use the CG-SDT or the RA-SDT. If the timer is running when the first small data arrives, it indicates that the current moment is farther from the next CG resource. To satisfy the delay requirement of the first small data, the terminal device may use the RA-SDT to transmit the first small data. That is, the terminal device may fall back to an RA-SDT manner. If the running of the timer has ended when the first small data arrives, it indicates that the current moment is closer to the next CG resource. The delay requirement can be satisfied by using the next CG resource to transmit the first small data.

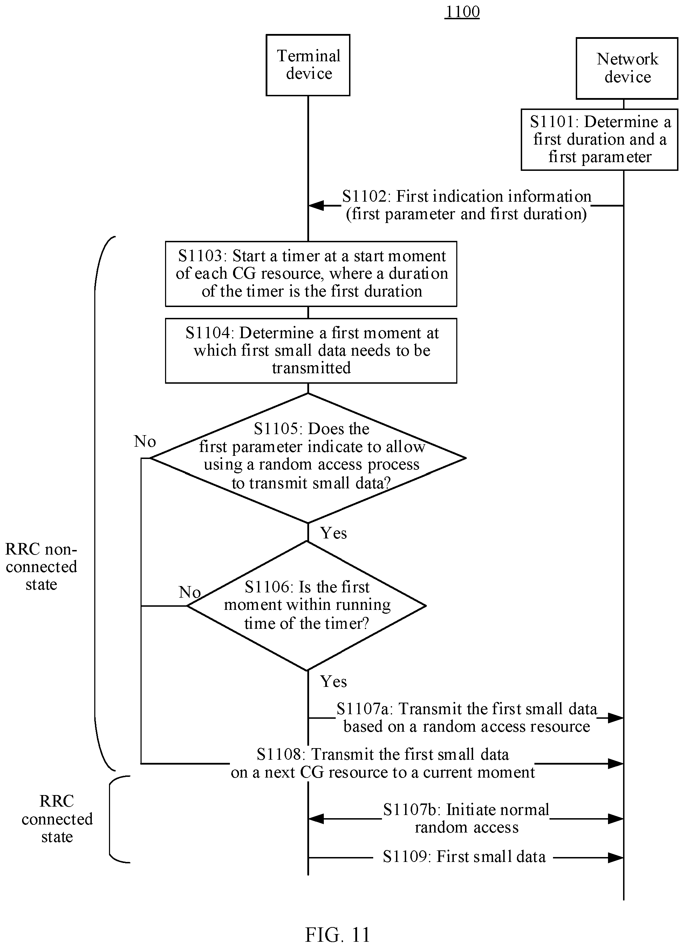

In the method 900, the terminal device may fall back from the CG-SDT to the RA-SDT by default. The first indication information in the method 900 may further indicate a first parameter, and the first parameter indicates whether to allow the terminal device to use a random access process to transmit the small data. Specifically, the following describes a method 1100 with reference to FIG. 11. The method 1100 includes the following steps.

S1101: A network device determines a first parameter and first duration.

For descriptions of the first duration, refer to the descriptions of S901.

Optionally, the network device may determine the first parameter based on a priority of a terminal device. For example, for a high-priority terminal device, the first parameter indicates to allow using a random access process to transmit small data. For a low-priority terminal device, the first parameter indicates not to allow using the random access process to transmit the small data.

Optionally, if a terminal device corresponds to a plurality of services, the network device may determine the first parameter based on a priority of a service of the terminal device. For example, for a high-priority service, the first parameter indicates to allow the service to use a random access process to transmit small data. For a low-priority service, the first parameter indicates not to allow the service to use the random access process to transmit the small data.

Optionally, if a terminal device corresponds to a plurality of logical channels, and different services correspond to different logical channels, the network device may configure, for the logical channel based on a priority of the service, whether to allow using a random access process to transmit small data. For logical channels corresponding to high-priority services, the network device configures the first parameter to indicate to allow these logical channels to use a random access process to transmit small data. For logical channels corresponding to low-priority services, the network device configures the first parameter to indicate not to allow these logical channels to use a random access process to transmit small data. Optionally, the logical channel may be replaced with a DRB.

In other words, the network device may configure the first parameter in a unit of the terminal device, the network device may configure the first parameter in a unit of the service, the network device may configure the first parameter in a unit of the logical channel, or the network device may configure the first parameter in a unit of the DRB. This is similar to the first duration. How to configure the first parameter is not limited in this embodiment of this application.

It may be understood that a relationship between the first parameter and a CG-SDT configuration is similar to a relationship between the first duration and the CG-SDT configuration. Refer to the descriptions of S901. To avoid repetition, details are not described in this application again.

It may be understood that there may be an association between the first parameter and the first duration. If the first duration is longer, the first parameter indicates to allow the terminal device to use the random access process to transmit the small data. If the first duration is shorter, the first parameter indicates not to allow the terminal device to use the random access process to transmit the small data. Alternatively, there may be no association between the first parameter and the first duration. A relationship between the first parameter and the first duration is not limited in this embodiment of this application.

It should be noted that, in S1101, the network device may simultaneously determine the first duration and the first parameter, or separately determine the first duration and the first parameter. This is not limited in this embodiment of this application.

S1102: The network device sends first indication information to the terminal device, and the terminal device receives the first indication information, where the first indication information indicates the first parameter and the first duration.

Optionally, if the first parameter is configured by the network device for the service of the terminal device, the first indication information specifically indicates the service and the first parameter; or if the first parameter is configured by the network device for the logical channel or the DRB of the terminal device, the first indication information specifically indicates the logical channel or the DRB and the first parameter. In other words, the first indication information needs to indicate whether the first parameter is parameter corresponding to the service or a parameter corresponding to the logical channel or the DRB, and specifically indicate a specific service corresponding to the first parameter, or a specific logical channel or a specific DRB corresponding to the first parameter.

Optionally, the terminal device is in an RRC connected state. That is, when the terminal device is in the RRC connected state, the network device may send the first indication information to the terminal device. Certainly, when the terminal device is in an RRC non-connected state, the network device may also send the first indication information to the terminal device.

Optionally, when the terminal device is in the RRC connected state, the terminal device may receive the CG-SDT configuration in S620 shown in FIG. 6. The CG-SDT configuration in S620 in FIG. 6 may include the first indication information. Optionally, when the terminal device is in the RRC non-connected state, the terminal device may also receive the CG-SDT configuration. For example, the response message in S640 may carry the CG-SDT configuration, and the CG-SDT configuration may include the first indication information. That is, the CG-SDT configuration may indicate a time-frequency position and a resource periodicity of a CG resource used by the terminal device to transmit the small data, and may also indicate the first parameter the first duration.

Optionally, the network device may send the first indication information to the terminal device via the response message in S620 or the response message in S640. In this case, a manner in which the network device sends the CG-SDT configuration is not limited.

Optionally, when the terminal device is in the RRC connected state, the network device may carry the first indication information in any message sent to the terminal device. For example, an RRCReconfiguration message may carry the first indication information.

Optionally, the first indication information may directly indicate the first parameter or indirectly indicate the first parameter. For example, the first indication information may directly indicate TRUE or FALSE. When the first indication information indicates that the first parameter is TRUE, it indicates to allow using the random access process to transmit the small data. When the first parameter is FALSE, it indicates not to allow using the random access process to transmit the small data. For another example, when an information bit that indicates the first parameter and that is in the first indication information is null, it indicates not to allow using the random access process to transmit the small data. For another example, when the first indication information does not indicate the first parameter, it indicates not to allow using the random access process to transmit the small data. For still another example, when the first indication information indicates that a value of the first parameter is 1, it indicates to allow using the random access process to transmit the small data; or when the first indication information indicates that a value of the first parameter is 0, it indicates not to allow using the random access process to transmit the small data.

The first duration and the first parameter may be for the terminal device, may be for the service of the terminal device, or may be for the logical channel or the DRB of the terminal device. This is similar to the descriptions of S902. Certainly, the first duration and the first parameter may alternatively not be both bound to the service, the logical channel, or the DRB. For example, the first duration configured by the network device is for the terminal device, and the configured first parameter is the parameter corresponding to the service of the terminal device; or the first duration configured by the network device is for the service, and the configured first parameter is the parameter corresponding to the logical channel or the DRB of the terminal device.

It should be noted that the first duration and the first parameter are indicated by the first indication information, or may be indicated by using different indication information. For example, the first indication information indicates the first duration, and another piece of indication information indicates the first parameter. The two pieces of indication information may be sent by using a same message or different messages. This is not limited in this embodiment of this application.

After S 1 102, the terminal device enters the non-connected state. After entering the non-connected state, the terminal device performs S1103.

S1103 and S1104 are the same as S903 and S904.

Optionally, after S1104, the method further includes: The terminal device determines whether a size of first small data is less than a first data threshold. If the size of the first small data is less than the first data threshold, S1105 is performed. Otherwise, the terminal device needs to enter the RRC _CONNECTED state to transmit the data, and S1107b is performed.

Optionally, the method further includes: The terminal device determines whether a current reference signal received power (reference signal received power, RSRP) is greater than a first RSRP threshold. If the current reference signal received power is greater than the first RSRP threshold, S1105 is performed. Otherwise, the procedure is ended. In other words, if the current RSRP of the terminal device is greater than the first RSRP threshold, it indicates that the terminal device is close to the network device, signal quality is good, and the small data may be transmitted.

Optionally, if the current RSRP of the terminal device is less than or equal to the first RSRP threshold, the procedure is not ended, and S1107b is proceeded to.

It may be understood that a relationship between S1103 or S1104 and that the terminal device compares the current RSRP with the first RSRP threshold may not be limited, and the terminal device may compare the current RSRP with the first RSRP threshold before or after S1103 or S1104, or the comparison and S1103 or S1104 may be performed simultaneously.

Optionally, after S1104, the method further includes: The terminal device determines whether a size of first small data is less than a first data threshold and whether a current RSRP is greater than a first RSRP threshold. If the size of the first small data is less than the first data threshold, and the current RSRP is greater than the first RSRP threshold, S1105 is performed. If the size of the first small data is greater than or equal to the first data threshold, the terminal device needs to enter the RRC_CONNECTED state to transmit the data, and S1107b is performed. If the current RSRP is less than the first RSRP threshold, the procedure is ended, or S1107b may be performed.

For other descriptions of S1104, refer to the descriptions of S904. To avoid repetition, details are not described.

S1105: If the first parameter indicates to allow using the random access process to transmit the small data, S1106 is performed; otherwise, S1108 is performed.

Optionally, S1103 and S1106 may not exist in the method 1100. In other words, the method 1100 may not include descriptions of whether to start a timer. This is similar to the method 900. If the first parameter indicates to allow using the random access process to transmit the small data in S1105, the terminal device determines that an arrival moment of the first small data is a first moment, and the terminal device determines a distance between a previous CG resource and the first moment. If the distance between the previous CG resource and the first moment is less than or equal to the first duration, it indicates that the first moment is farther from a next CG resource, and S1107a is performed. If the distance between the previous CG resource and the first moment is greater than the first duration, it indicates that the first moment is closer to a next CG resource, and S1108 is performed.

S1106: The terminal device determines whether the first moment is within running time of the timer. If the first moment is within the running time of the timer, S1107a is performed. Otherwise, S1108 is performed.

S1107a: The terminal device transmits the first small data based on a random access resource.

For specific descriptions of S1107, refer to the descriptions of S906.

S1108: The terminal device transmits the first small data on a next CG resource to a current moment.

For specific descriptions of S1108, refer to the descriptions of S907.

S1107b: The terminal device initiates normal random access, and the terminal device enters the RRC connected state.

After S1107b, the method 1100 includes S1109.

S1109: The terminal device transmits the first small data in the RRC connected state.

Optionally, if no random access resource is configured by using a broadcast message sent by the network device, for example, the first resource configuration information is not carried in S410 or S510, it indicates that the terminal device and the network device do not support RA-SDT. In this case, S1107a does not need to be performed, and S1107b is directly performed. In other words, if the terminal device needs to fall back from CG-SDT to the RA-SDT according to this embodiment of this application, the terminal device can fall back to the RA-SDT only when both the terminal device and the network device support the RA-SDT. Otherwise, the terminal device needs to initiate a normal random access procedure, and enter the RCC connected state from the RRC non-connected state, to transmit the first small data. In other words, whether the terminal device and the network device support the RA-SDT may be unrelated to the first parameter.

Optionally, if no random access resource is configured by using a broadcast message sent by the network device, for example, the first resource configuration information is not carried in S410 or S510, it indicates that the terminal device and the network device do not support RA-SDT, a data volume of the first small data is greater than or equal to a second data threshold, or the current RSRP of the terminal device is less than a second RSRP threshold. In this case, S1107a does not need to be performed, and S1107b is directly performed. In other words, if the terminal device needs to fall back from CG-SDT to the RA-SDT according to this embodiment of this application, the terminal device may fall back to the RA-SDT only when both the terminal device and the network device support the RA-SDT and the terminal device satisfies a condition for performing RA-SDT. Otherwise, the terminal device needs to initiate a normal random access procedure, and enter the RCC connected state from the RRC non-connected state, to transmit the first small data.

It may be understood that the second data threshold and the second RSRP threshold are similar to the descriptions of the method 900. Refer to the descriptions of the method 900.

Optionally, if no random access resource is configured by using a broadcast message sent by the network device, for example, the first resource configuration information is not carried in S410 or S510, it indicates that the terminal device and the network device do not support RA-SDT. That is, the first parameter indicates not to allow using the random access process to transmit the small data. Alternatively, if the first resource configuration information is carried in S410 or S510, it indicates that the terminal device and the network device support RA-SDT. That is, the first parameter indicates to allow using the random access process to transmit the small data. In other words, whether the terminal device and the network device support the RA-SDT may be related to the first parameter.

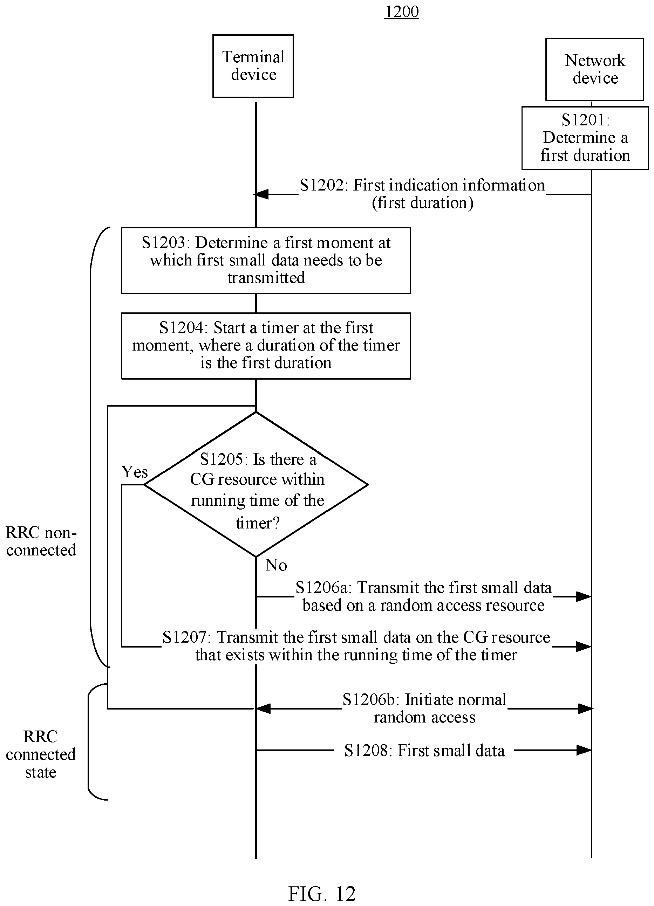

The following describes a small data transmission method 1200 in an embodiment of this application with reference to FIG. 12. The method 1200 includes the following steps.

S1201: A network device determines first duration.

The first duration is maximum allowed waiting duration.

Optionally, the first duration may be configured by the network device for a terminal device, configured by the network device for a service of the terminal device, or configured by the network device for a logical channel or a DRB of the terminal device. The following describes three cases:
Case A: The network device configures one first duration for the terminal device.

For example, the first duration is related to an initial-transmission success rate or retransmission duration of the terminal device. Specifically, the network device may determine the first duration based on the initial-transmission success rate or the retransmission duration of the terminal device in historical data. A lower initial-transmission success rate of the terminal device indicates shorter first duration. A higher initial-transmission success rate of the terminal device indicates longer first duration. Longer retransmission duration of the terminal device indicates shorter first duration. Shorter retransmission duration of the terminal device indicates longer first duration.

Case B: The network device configures one first duration for one service of the terminal device, and first durations of different services may be the same or different.

The network device may configure different durations for services having different delay requirements, and the network device may determine a delay requirement of the service based on historical data of the service. The first duration is related to a delay requirement of a service corresponding to first small data. For example, a higher delay requirement of the service corresponding to the first small data indicates shorter first duration. For another example, a lower delay requirement of the service corresponding to the first small data indicates longer first duration. For example, the network device may determine the delay requirement of the service based on quality of service (quality of service, QoS) of the service. For example, the network device may determine the delay requirement of the service based on a packet delay budget (packet delay budget, PDB) of the historical data.

Case C: The network device configures one first duration for one logical channel or one DRB of the terminal device, and first durations corresponding to different logical channels or different DRBs may be the same or different.

Because there is a correspondence between a service and the logical channel/the DRB, delay requirements of different logical channels/DRBs may be the same or different. The network device may determine, based on QoS corresponding to the logical channel/the DRB, a delay requirement of the service corresponding to the DRB. For example, the network device may determine the delay requirement of the service based on a PDB corresponding to the DRB. For example, a higher delay requirement of a service corresponding to first small data indicates shorter first duration. For another example, a lower delay requirement of a service corresponding to first small data indicates longer first duration. For example, the network device may configure two durations for 10 logical channels of the terminal device, where five logical channels correspond to one duration, and the other five logical channels correspond to one duration. For another example, the network device may configure 10 durations for 10 logical channels of the terminal device, where one logical channel corresponds to one duration, and durations of different logical channels may be the same or different.

For example, if a periodicity of a CG resource is T, and a delay length corresponding to the delay requirement of the service corresponding to the first small data is Q, the first duration is greater than or equal to P, and P is positively correlated with Q. That is, larger Q indicates larger P. In other words, a higher delay requirement corresponding to the first small data indicates smaller Q, and therefore indicates shorter first duration. A lower delay requirement corresponding to the first small data indicates larger Q, and therefore indicates longer first duration.

In other words, the network device configures one first duration in a unit of the terminal device. Alternatively, the network device configures the duration in a unit of the service, and configures the different durations for the services having the different delay requirements. Alternatively, the network device configures the duration in a unit of the logical channel or the DRB. How to configure the duration is not limited in this embodiment of this application.

It is described in Case A, Case B, and Case C above that the first duration corresponds to the terminal device, the first duration corresponds to one service of the terminal device, and the first duration corresponds to one logical channel or one DRB of the terminal device. Similarly, the CG-SDT configuration in FIG. 6 may correspond to the terminal device, correspond to the service of the terminal device, or correspond to the logical channel or the DRB of the terminal device. The following describes a relationship between both the CG-SDT configuration and the first duration and the terminal device, the service of the terminal device, and the logical channel or the DRB of the terminal device. The following provides descriptions in different cases:
Case 1: The network device configures the first duration based on the foregoing three cases, and configures one CG-SDT configuration for the terminal device. That is, the first duration may be configured based on the terminal device, the service, or the logical channel or the DRB, but the CG-SDT configuration may be configured based on the terminal device.

In other words, in Case 1, the network device may configure the first duration in any manner in Case A, Case B, or Case C, and the CG-SDT configuration needs to be configured based on the terminal device, so that configuration flexibility can be improved.

Case 2: The network device may configure one CG-SDT configuration for the terminal device, configure the CG-SDT configuration for the service of the terminal device, or configure the CG-SDT configuration for the logical channel or the DRB of the terminal device, and configure one first duration for the terminal device. That is, the CG-SDT configuration may be configured based on the terminal device, the service, or the logical channel or the DRB, but the first duration may be configured based on the terminal device.

In other words, in Case 2, a manner of configuring the CG-SDT configuration is not limited, and the first duration needs to be configured based on the terminal device, so that configuration flexibility can be improved.

Case 3: The network device configures one first duration and one CG-SDT configuration for the terminal device. That is, the terminal device corresponds to the first duration and the CG-SDT configuration.

Optionally, the network device may send, to the terminal device via the response message in S620, the CG-SDT configuration and the first duration that are configured for the terminal device.

Case 4: The network device configures one first duration and one CG-SDT configuration for the service of the terminal device. That is, the service of the terminal device corresponds to the first duration and the CG-SDT configuration.

Optionally, the network device may send, to the terminal device via the response message in S620, the CG-SDT configuration and the first duration that are configured for the service of the terminal device.

Case 5: The network device configures one first duration and one CG-SDT configuration for the DRB or the logical channel of the terminal device. That is, the logical channel or the DRB of the terminal device corresponds to the first duration and the CG-SDT configuration.

Optionally, the network device may send, to the terminal device via the response message in S620, the CG-SDT configuration and the first duration that are configured for the logical channel or the DRB of the terminal device.

In other words, a manner of configuring the first duration and the CG-SDT configuration is not limited in this embodiment of this application.

S1202: The network device sends first indication information to the terminal device, and the terminal device receives the first indication information, where the first indication information indicates the first duration.

Optionally, if the first duration is configured by the network device for the service of the terminal device, the first indication information specifically indicates a correspondence between the service and the first duration (for Case B in S1201); or if the first duration is configured by the network device for the logical channel or the DRB of the terminal device, the first indication information specifically indicates a correspondence between the logical channel or the DRB and the first duration (for Case C in S1201). In other words, the first indication information needs to indicate whether the first duration is duration corresponding to the service or duration corresponding to the logical channel or the DRB, and specifically indicate a specific service corresponding to the first duration, or a specific logical channel or a specific DRB corresponding to the first duration.

Optionally, the terminal device is in an RRC connected state. That is, when the terminal device is in the RRC connected state, the network device may send the first indication information to the terminal device. Certainly, when the terminal device is in an RRC non-connected state, the network device may also send the first indication information to the terminal device.

Optionally, when the terminal device is in the RRC connected state, the terminal device may receive the CG-SDT configuration in S620 shown in FIG. 6. The CG-SDT configuration in S620 in FIG. 6 may include the first indication information. Optionally, when the terminal device is in the RRC non-connected state, the terminal device may also receive the CG-SDT configuration. For example, the response message in S640 may carry the CG-SDT configuration, and the CG-SDT configuration may include the first indication information. That is, the CG-SDT configuration may indicate a time-frequency position and a resource periodicity of the CG resource used by the terminal device to transmit small data, and may also indicate the first duration. In other words, the CG-SDT configuration is bound to the first duration. For example, for Case 3 in S1201, the CG-SDT configuration and the first duration may be configured by the network device for the terminal device. For another example, for Case 4 in S1201, the CG-SDT configuration and the first duration may be configured by the network device for the service of the terminal device. For still another example, for Case 5 in S1201, the CG-SDT configuration and the first duration may be configured by the network device for the logical channel or the DRB of the terminal device.

Optionally, the network device may send the first indication information to the terminal device via the response message in S620 or the response message in S640. In this case, a manner in which the network device sends the CG-SDT configuration is not limited.

Optionally, when the terminal device is in the RRC connected state, the network device may carry the first indication information in any message sent to the terminal device. For example, an RRCReconfiguration (RRC reconfiguration) message may carry the first indication information. In this case, a manner in which the network device sends the CG-SDT configuration is not limited.

Optionally, the first indication information may directly indicate the first duration or indirectly indicate the first duration. For example, the first indication information may directly indicate that the first duration is 0.5 ms, or indicate, by using an index value 1, that the first duration is 0.5 ms. Alternatively, there may be a correspondence between the first duration and a parameter configured by the network device for the terminal device. For example, the CG-SDT configuration sent by the network device to the terminal device indicates the resource periodicity of the CG resource for transmitting the small data. There is a correspondence between the resource periodicity and the first duration. The correspondence may be specified in a protocol. The terminal device may determine the first duration based on the resource periodicity. In other words, in this embodiment of this application, a manner in which the network device indicates the first duration is not limited.

Optionally, a unit of the first duration may be millisecond (ms), a frame, a subframe, a slot, or the like. The unit of the first duration is not limited in this embodiment of this application.

Optionally, S1201 and S1202 may not exist in the method 1200. The terminal device may determine the first duration based on a service feature of the terminal device. For example, there are four optional values of the first duration: 0.5 ms, 1 ms, 1.5 ms, and 2 ms. The terminal device may select one of the four values as the first duration based on the service feature of the terminal device. For example, for a service having a higher delay requirement, the terminal device may select 0.5 ms as the first duration. For a service having a lower delay requirement, the terminal device may select 2 ms as the first duration.

After S1202, the terminal device enters the RRC non-connected state. After entering the RRC non-connected state, the terminal device performs S1203.

S1203: The terminal device determines a first moment at which the first small data needs to be transmitted.

The first moment may alternatively be understood as an arrival moment of the first small data.

Optionally, after S1203, the method further includes: The terminal device determines whether a size of the first small data is less than a first data threshold. If the size of the first small data is less than the first data threshold, S1204 is performed. Otherwise, the terminal device needs to enter the RRC _CONNECTED state to transmit the data, and S1206b is performed.

Optionally, the method further includes: The terminal device determines whether a current reference signal received power (reference signal received power, RSRP) is greater than a first RSRP threshold. If the current reference signal received power is greater than the first RSRP threshold, S1204 is performed. Otherwise, the procedure is ended. In other words, if the current RSRP of the terminal device is greater than the first RSRP threshold, it indicates that the terminal device is close to the network device, signal quality is good, and the small data may be transmitted.

Optionally, if the current RSRP of the terminal device is less than or equal to the first RSRP threshold, the procedure is not ended, and S1206b is proceeded to.

It may be understood that a relationship between S1203 and that the terminal device compares the current RSRP with the first RSRP threshold may not be limited, and the terminal device may compare the current RSRP with the first RSRP threshold before or after S1203, or the comparison and S1203 may be performed simultaneously.

Optionally, after S1203, the method further includes: The terminal device determines whether a size of the first small data is less than a first data threshold and whether a current RSRP is greater than a first RSRP threshold. If the size of the first small data is less than the first data threshold, and the current RSRP is greater than the first RSRP threshold, S1204 is performed. If the size of the first small data is greater than or equal to the first data threshold, the terminal device needs to enter the RRC_CONNECTED state to transmit the data, and S1206b is performed. If the current RSRP is less than the first RSRP threshold, the procedure is ended, or S1206b is performed.

Optionally, the terminal device in the RRC non-connected state may receive a broadcast message sent by the network device, where the broadcast message includes the first data threshold and/or the first RSRP threshold. Alternatively, the terminal device in the RRC_CONNECTED state may receive the RRC reconfiguration message sent by the network device, where the RRC reconfiguration message includes the first data threshold and/or the first RSRP threshold. Alternatively, the CG-SDT configuration shown in FIG. 6 may also indicate the first data threshold and/or the first RSRP threshold. How the terminal device obtains the first data threshold and/or the first RSRP threshold is not limited in this embodiment of this application.

It may be understood that, similar to the first duration, the first small data may be data of the terminal device, data corresponding to the service of the terminal device, or data corresponding to the logical channel or the DRB of the terminal device.

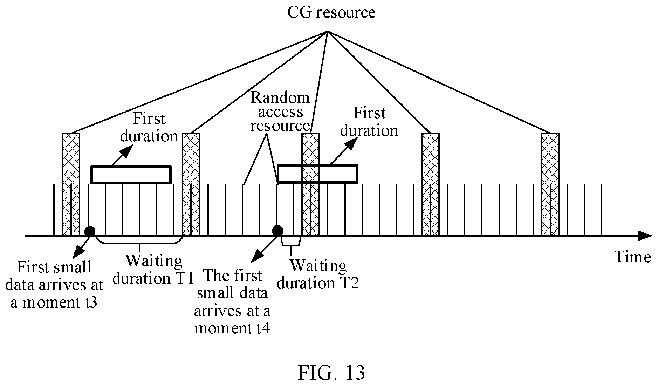

It may be understood that, if the first moment is after a start moment of one CG resource and before an end moment of the CG resource, the terminal device may also attempt to send the first small data on the CG resource. If the sending fails, S1204 is performed. Alternatively, the first small data is not sent on the CG resource, and S1204 is directly performed. In other words, if the arrival moment of the first small data falls within a time range of the CG resource exactly, the first small data may alternatively be sent by using the CG resource. If the sending fails, the method in this embodiment of this application is performed. Alternatively, the method in this embodiment of this application is directly performed. For example, as shown in FIG. 13, if the arrival moment of the first small data falls within a range of the first CG resource, the terminal device may attempt to send the first small data on the first CG resource, or may perform S1204 rather than send the first small data on the CG resource.

S1204: The terminal device starts a timer at the first moment, where duration of the timer is the first duration.

An interval between two adjacent CG resources is the periodicity of the CG resource, and the first duration is less than the periodicity of the CG resource. The CG-SDT configuration shown in FIG. 6 may be for configuring the time-frequency position and the periodicity of the CG resource.

S1205: The terminal device determines whether there is a CG resource within running time of the timer. If there is one CG resource within the running time of the timer, S1207 is performed. Otherwise, S1206a is performed.

Specifically, the terminal device may learn of the time-frequency position of the CG resource based on the CG configuration. In this way, the terminal device may determine, based on the first moment, whether there is a next CG resource within the running time of the timer. In other words, the terminal device may perform S1204 after the first moment without waiting for the next CG resource to perform 1204.

Optionally, if the first duration is configured by the network device for the terminal device, and the network device may configure one or more CG-SDT configurations for the terminal device, S1205 includes: After the terminal device starts the timer at the first moment, the terminal device determines whether there is, within the running time of the timer, a CG resource configured by the network device for the terminal device. If yes, S1207 is performed. Otherwise, S1206a is performed. In other words, the terminal device needs to determine, within the running time of the timer, whether there is a specific CG resource configured by the network device for the terminal device. That is, in this case, the CG-SDT configuration shown in FIG. 6 indicates a CG resource of the terminal device.

Optionally, if the first duration is configured by the network device for one service of the terminal device, and the network device configures one or more CG-SDT configurations for the service, S1205 includes: After the terminal device starts the timer at the first moment, the terminal device determines whether there is, within the running time of the timer, a CG resource configured by the network device for the service. If yes, S1207 is performed. Otherwise, S1206a is performed. That is, the CG-SDT configuration shown in FIG. 6 indicates a CG resource of the service of the terminal device. It may be understood that different services may correspond to different CG-SDT configurations, different services may correspond to a same CG-SDT configuration, or a same service may correspond to different CG-SDT configurations. The network device may send at least one CG-SDT configuration of a plurality of services to the terminal device, where one CG-SDT configuration corresponds to one service, or one CG-SDT configuration corresponds to a plurality of services.

Optionally, if the first duration is configured by the network device for one logical channel or one DRB of the terminal device, and the network device configures one or more CG-SDT configurations for the logical channel (or the DRB), S1205 includes: After the terminal device starts the timer at the first moment, the terminal device determines whether there is, within the running time of the timer, a CG resource configured by the network device for the logical channel or the DRB. If yes, S1207 is performed. Otherwise, S1206a is performed. That is, the CG-SDT configuration shown in FIG. 6 indicates a CG resource corresponding to the logical channel or the DRB. It may be understood that different logical channels may correspond to different CG-SDT configurations, different logical channels may correspond to a same CG-SDT configuration, or a same logical channel may correspond to different CG-SDT configurations. The network device may send at least one CG-SDT configuration of a plurality of logical channels or a plurality of DRBs to the terminal device, where one CG-SDT configuration corresponds to one logical channel or one DRB, or one CG-SDT configuration may correspond to a plurality of logical channels or a plurality of DRBs.

Optionally, S1204, S1205, and S1207 may not exist in the method 1200. In other words, the method 1200 may not include descriptions about the timer. In an alternative solution for S1204, S1205, and S1207, the terminal device determines, depending on whether there is a CG resource in the first duration starting from the first moment, a resource for transmitting the first small data. If there is a CG resource in the first duration starting from the first moment, the first small data is transmitted on the existing CG resource; or if there is no CG resource in the first duration starting from the first moment, S1206a is performed.

Optionally, S1204, S1205, and S1207 may not exist in the method 1200. In other words, the method 1200 may not include descriptions about the timer. In an alternative solution for S1204, S1205, and S1207, the terminal device determines, depending on whether duration between the first moment and the next configured grant is greater than or equal to the first duration, a resource for transmitting the first small data. Specifically, if the duration between the first moment and the next CG resource is greater than the first duration, S1206a is performed; or if the duration between the first moment and the next CG resource is less than or equal to the first duration, the first small data is transmitted on the next CG resource.

S1206a: The terminal device transmits the first small data based on a random access resource.

That the terminal device transmits the first small data based on a random access resource may be understood as that the terminal device performs RA-SDT to transmit the first small data.

Specifically, the terminal device sends a message 1 or a message A on the random access resource indicated by the resource configuration information in S410 or S510. For the fourstep random access in FIG. 4, the terminal device may send the message 1 on the random access resource indicated by the resource configuration information in S410, and send the first small data in the message 3. For the two-step random access in FIG. 5, the terminal device may send the message A on random access resource indicated by the resource configuration information in S510, where the message A includes the first small data.

Optionally, the random access resource selected by the terminal device may be a resource that is close to the first moment within the running time of the timer.

Optionally, if the terminal device has neither a CG resource nor a random access resource within the running time of the timer, the terminal device may select the first resource that is after running of the timer ends, to transmit the small data, where the first resource may be a CG resource, or may be a random access resource.

S1207: The terminal device transmits the first small data on the CG resource that exists within the running time of the timer.

To better describe S1204 to S1207, the following uses an example for description with reference to FIG. 13. If the first small data arrives at a moment t3, the terminal device starts the timer at the moment t3, and the duration of the timer is the first duration. The terminal device determines that there is no CG resource within a time length that is of the first duration and that uses t3 as a start moment. In this case, if the first small data needs to be transmitted by using the next CG resource, waiting duration is T1, and T1 is longer, which usually does not satisfy a delay requirement of the first small data. If the first small data arrives at a moment t4, the terminal device starts the timer at the moment t4, and the duration of the timer is the first duration. The terminal device determines that there is one CG resource (the third CG resource) within a time length that is of the first duration and that uses t4 as a start moment. If the first small data is transmitted by using the CG resource, duration that needs to be waited is T2, and T2 is shorter, which can usually satisfy a delay requirement of the first small data. Therefore, the first small data may be transmitted by using the CG resource.

S1206b: The terminal device initiates normal random access, and the terminal device enters the RRC connected state.

After S1206b, the method 1200 includes S1208.

S1208: The terminal device transmits the first small data in the RRC connected state.

Optionally, if no random access resource is configured by using the broadcast message sent by the network device, for example, the first resource configuration information is not carried in S410 or S510, it indicates that the terminal device and the network device do not support the RA-SDT. In this case, S1206a does not need to be performed, and S1206b is directly performed. In other words, if the terminal device needs to fall back from CG-SDT to the RA-SDT according to this embodiment of this application, the terminal device can fall back to the RA-SDT only when both the terminal device and the network device support the RA-SDT. Otherwise, the terminal device needs to initiate a normal random access procedure, and enter the RCC connected state from the RRC non-connected state, to transmit the first small data.

Optionally, if no random access resource is configured by using the broadcast message sent by the network device, for example, the first resource configuration information is not carried in S410 or S510, it indicates that the terminal device and the network device do not support the RA-SDT, a data volume of the first small data is greater than or equal to a second data threshold, or the current RSRP of the terminal device is less than a second RSRP threshold. In this case, S1206a does not need to be performed, and S1206b is directly performed. In other words, if the terminal device needs to fall back from CG-SDT to the RA-SDT according to this embodiment of this application, the terminal device may fall back to the RA-SDT only when both the terminal device and the network device support the RA-SDT and the terminal device satisfies a condition for performing RA-SDT. Otherwise, the terminal device needs to initiate a normal random access procedure, and enter the RCC connected state from the RRC non-connected state, to transmit the first small data.

It may be understood that the second data threshold and the second RSRP threshold are similar to the descriptions of the method 900. Refer to the descriptions of the method 900.

In the foregoing solution, the terminal device starts the timer at the first moment at which the first small data arrives, and the duration of the timer is the first duration. The terminal device determines whether there is a CG resource within the running time of the timer. If there is a CG resource, it indicates that there is a CG resource at a moment not far from a current moment. If the CG resource is used to transmit the first small data, the delay requirement of the first small data can usually be satisfied. If the terminal device determines that there is no CG resource within the running time of the timer, it indicates that a current moment is far from a next CG resource. To satisfy the delay requirement of the first small data, the terminal device may use the RA-SDT to transmit the first small data, that is, may fall back to an RA-SDT manner.

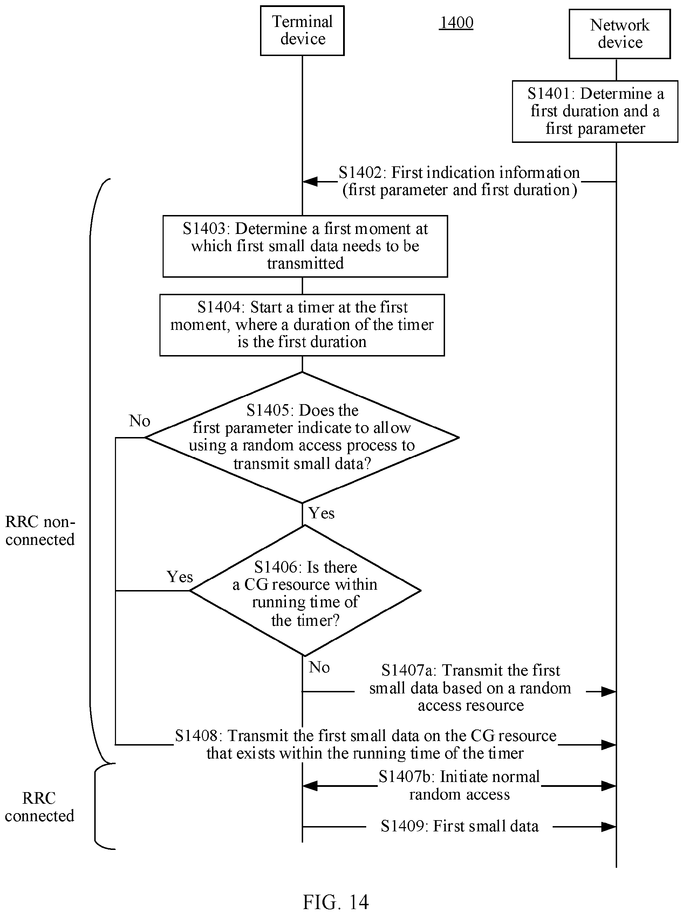

In the method 1200, the terminal device may fall back from the CG-SDT to the RA-SDT by default. The first indication information in the method 1200 may further indicate a first parameter. The first parameter is similar to that in the method 1100. The following briefly describes a first parameter and first duration in a method 1400 with reference to FIG. 14. The method 1400 includes the following steps.

S1401: A network device determines the first duration and the first parameter.

S1402: The network device sends first indication information to a terminal device, and the terminal device receives the first indication information, where the first indication information indicates the first parameter and the first duration.

For the first duration, refer to the descriptions in the method 1200. For the first parameter, refer to the descriptions in the method 1100.

S1403: The terminal device determines a first moment at which first small data needs to be transmitted.

The first moment may alternatively be understood as an arrival moment of the first small data.

Optionally, after S1403, the method further includes: The terminal device determines whether a size of the first small data is less than a first data threshold. If the size of the first small data is less than the first data threshold, S1404 is performed. Otherwise, the terminal device needs to enter an RRC_CONNECTED state to transmit the data, and S1407b is performed.

Optionally, the method further includes: The terminal device determines whether a current reference signal received power (reference signal received power, RSRP) is greater than a first RSRP threshold. If the current reference signal received power is greater than the first RSRP threshold, S1404 is performed. Otherwise, the procedure is ended. In other words, if the current RSRP of the terminal device is greater than the first RSRP threshold, it indicates that the terminal device is close to the network device, signal quality is good, and the small data may be transmitted.

Optionally, if the current RSRP of the terminal device is less than or equal to the first RSRP threshold, the procedure is not ended, and S1407b is proceeded to.

It may be understood that a relationship between S1403 and that the terminal device compares the current RSRP with the first RSRP threshold may not be limited, and the terminal device may compare the current RSRP with the first RSRP threshold before or after S1403, or the comparison and S1403 may be performed simultaneously.

Optionally, after S1403, the method further includes: The terminal device determines whether a size of the first small data is less than a first data threshold and whether a current RSRP is greater than a first RSRP threshold. If the size of the first small data is less than the first data threshold, and the current RSRP is greater than the first RSRP threshold, S1404 is performed. If the size of the first small data is greater than or equal to the first data threshold, the terminal device needs to enter an RRC _CONNECTED state to transmit the data, and S1407b is performed. If the current RSRP is less than the first RSRP threshold, the procedure is ended, or S1407b is performed.

For other descriptions of S1403, refer to the descriptions of S1203. To avoid repetition, details are not described.

S1404 is the same as S1204.

S1405: If the first parameter indicates to allow using a random access process to transmit the small data, S1406 is performed; otherwise, S1408 is performed.

It should be noted that, there is no limitation on a sequence of S1404 and S1405. To be specific, there is no limitation on a sequence of that the terminal device starts the timer and determines whether the first parameter indicates to allow using the random access process to transmit the small data. If S1405 is performed before S1404, and the first parameter indicates to allow using the random access process to transmit the small data, S1404 is performed.

S1406, S1407a, and S1408 are respectively the same as S1205, S1206a, and S1207.

Optionally, S1404, S1406, and S1408 may not exist in the method 1400. In other words, the method 1400 may not include descriptions about the timer. In an alternative solution for S1404, S1406, and S1408, the terminal device determines, depending on whether there is a CG resource in the first duration starting from the first moment and based on the first parameter, a resource for transmitting the first small data. If there is a CG resource in the first duration starting from the first moment, and the first parameter indicates not to allow using the random access process to transmit the small data, the first small data is transmitted on the existing CG resource; or if there is no CG resource in the first duration starting from the first moment, and the first parameter indicates to allow using the random access process to transmit the small data, S1407a is performed.

Optionally, S1404, S1406, and S1408 may not exist in the method 1400. In other words, the method 1400 may not include descriptions about the timer. In an alternative solution for S1404, S1406, and S1408, the terminal device determines, depending on whether duration between the first moment and a next configured grant is greater than or equal to the first duration and based on the first parameter, a resource for transmitting the first small data. Specifically, if the duration between the first moment and the next CG resource is greater than the first duration, and the first parameter indicates to allow using the random access process to transmit the small data, S1407a is performed; or if the duration between the first moment and the next CG resource is less than or equal to the first duration, and the first parameter indicates not to allow using the random access process to transmit the small data, the first small data is transmitted on the next CG resource.

S1407b: The terminal device initiates normal random access, and the terminal device enters the RRC connected state.

After S1407b, the method 1400 includes S1409.

S1409: The terminal device transmits the first small data in the RRC connected state.

For descriptions of S1409, refer to the descriptions of S1208.

It should be noted that the first duration in the method embodiments in FIG. 12 to FIG. 14 may be the same as or different from the first duration in the method embodiments in FIG. 9 to FIG. 11. This is not limited in this application. The first small data in the method embodiments in FIG. 12 to FIG. 14 may be the same as or different from the first small data in the method embodiments in FIG. 9 to FIG. 11. The first moment in the method embodiments in FIG. 12 to FIG. 14 may be the same as or different from the first moment in the method embodiments in FIG. 9 to FIG. 11. Similarly, the first indication information in the method embodiments in FIG. 12 to FIG. 14 may be the same as or different from the first indication information in the method embodiments in FIG. 9 to FIG. 11.

In the foregoing solutions, the terminal device supports the CG-SDT by default. Optionally, before the method 900, the method 1100, the method 1200, or the method 1400, the method further includes: The terminal device determines that the CG-SDT is valid. Specifically, the terminal device determines whether at least one of the following conditions is satisfied, thereby determining whether the CG-SDT is valid.

Condition 1: If the TAT is running, that is, the TA of the terminal device is valid, and the terminal device and the network device are in an uplink synchronization state, it indicates that the CG-SDT is valid; otherwise, the CG-SDT is invalid.

Condition 2: On a premise that the TAT is running, the current RSRP of the terminal device is greater than a preset RSRP threshold 1. In other words, that the current RSRP of the terminal device is greater than a preset RSRP threshold 1 indicates that the terminal device is closer to the network device, and channel quality is better. If CG-SDT is performed, a success rate is higher, and the CG-SDT is valid. If the current RSRP is less than or equal to the preset RSRP threshold 1, it indicates that the terminal device is farther from the network device, and channel quality is poor. If CG-SDT is performed, a success rate is lower, and the CG-SDT is invalid. The RSRP threshold 1 may be configured by the network device for the CG-SDT, and the first RSRP threshold or the second RSRP threshold may be configured by the network device for the CG-SDT and the RA-SDT.

Condition 3: When a TA is valid, if an increase or a decrease of the RSRP of the terminal device does not exceed an RSRP threshold 2, it indicates that the CG-SDT is valid. In other words, whether the terminal device moves may be determined based on the increase or the decrease of the RSRP of the terminal device. If the increase or the decrease of the RSRP is greater than or equal to the RSRP threshold 2, it indicates that the terminal device moves or moves for a longer distance relative to that the TA is valid last time. If the CG-SDT is used, a success rate is lower, and the CG-SDT is invalid. On the contrary, if the increase or decrease of the RSRP is less than an RSRP threshold 2, it indicates that the terminal device does not move or moves for a shorter distance relative to that the TA is valid last time. If the CG-SDT is used, a success rate is higher, and the CG-SDT is valid.

Condition 4: If the network device configures the CG-SDT on the SUL and/or the NUL, the terminal device needs to determine, based on a comparison between the current RSRP and an RSRP threshold 3 preset by a base station, whether the CG-SDT configured on the SUL is valid or the CG-SDT configured on the NUL is valid. Assuming that the CG-SDT is configured on both the SUL and the NUL, the terminal device compares the current RSRP with the RSRP threshold 3. If the current RSRP is less than the RSRP threshold 3, the CG-SDT on the SUL is selected. If the current RSRP is greater than the RSRP threshold 3, the CG-SDT on the NUL is selected. In other words, if the network device configures the CG-SDT on both the SUL and the NUL, if the current RSRP of the terminal device is less than the RSRP threshold 3, it indicates that the terminal device is farther from the network device, and the CG-SDT configured on the SUL should be used. That is, the CG-SDT on the SUL is valid, and the CG-SDT on the NUL is invalid. If the current RSRP of the terminal device is greater than or equal to the RSRP threshold 3, it indicates that the terminal device is closer to the network device, and the CG-SDT configured on the NUL should be used. In other words, the CG-SDT on the NUL is valid, and the CG-SDT on the SUL is invalid. Assuming that the network device configures the CG-SDT only on the SUL, the terminal device compares the current RSRP with the RSRP threshold 3. If the current RSRP is less than the RSRP threshold 3, the CG-SDT on the SUL is selected. In this case, the CG-SDT is valid. If the current RSRP is greater than or equal to the RSRP threshold 3, the CG-SDT cannot be used. That is, the CG-SDT on the SUL is invalid. In other words, the network device configures the CG-SDT on the SUL. The CG-SDT on the SUL may be used when the terminal device is farther from the network device. Otherwise, the CG-SDT on the SUL is invalid. Assuming that the network device configures the CG-SDT only on the NUL, the terminal device compares the current RSRP with the RSRP threshold 3. If the current RSRP is less than the RSRP threshold 3, the CG-SDT cannot be used. If the current RSRP is greater than or equal to the RSRP-3, the CG-SDT on the NUL is selected. That is, the CG-SDT on the NUL is valid. In other words, the network device configures the CG-SDT on the NUL. The CG-SDT on the NUL may be used only when the terminal device is closer to the network device. Otherwise, the CG-SDT on the NUL is invalid.

Condition 5: A range in which the terminal device is located is coverage of the network device, and the network device has configured, for the terminal device, a CG resource for the CG-SDT.

It should be noted that, in embodiments of this application, the first RSRP threshold, the second RSRP threshold, the RSRP threshold 1, the RSRP threshold 2, and the RSRP threshold 3 may be broadcast by the network device in the broadcast message or configured by the network device. This is not limited in embodiments of this application. The first RSRP threshold or the second RSRP threshold may be the same as the RSRP threshold 1, the RSRP threshold 2, or the RSRP threshold 3, or the first RSRP threshold or the second RSRP threshold may be different from the RSRP threshold 1, the RSRP threshold 2, or the RSRP threshold 3.

It should be noted that the first small data in embodiments of this application may also be referred to as small packet data.

In this embodiment of this application, "greater than or equal to" may be replaced with "greater than", "less than" may be replaced with "less than or equal to", "greater than" may be replaced with "greater than or equal to", and "less than or equal to" may be replaced with "less than". In other words, in embodiments of this application, a case of "equal to" may belong to the branch "greater than", or may belong to the branch "less than". This is not limited in embodiments of this application.

Embodiments described in this specification may be independent solutions, or may be combined based on internal logic. All these solutions fall within the protection scope of this application.

It may be understood that the methods and operations implemented by the terminal device in the foregoing method embodiments may alternatively be implemented by a component (for example, a chip or a circuit) that may be used in the terminal device, and the methods and operations implemented by the network device in the foregoing method embodiments may alternatively be implemented by a component (for example, a chip or a circuit) that may be used in the network device.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

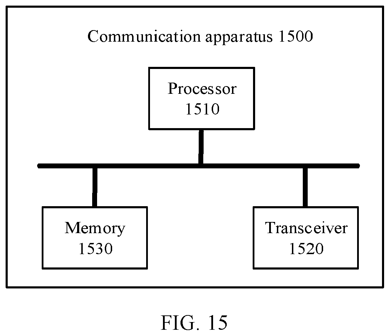

FIG. 15 shows a communication apparatus 1500 according to an embodiment of this application. The communication apparatus 1500 includes a processor 1510 and a transceiver 1520. The processor 1510 and the transceiver 1520 communicate with each other through an internal connection path, and the processor 1510 is configured to execute instructions, to control the transceiver 1520 to send a signal and/or receive a signal.

Optionally, the communication apparatus 1500 may further include a memory 1530. The memory 1530 communicates with the processor 1510 and the transceiver 1520 through an internal connection path. The memory 1530 is configured to store instructions, and the processor 1510 may execute the instructions stored in the memory 1530. In a possible implementation, the communication apparatus 1500 is configured to implement the procedures and the steps corresponding to the terminal device in the foregoing method embodiments. In another possible implementation, the communication apparatus 1500 is configured to implement the procedures and the steps corresponding to the network device in the foregoing method embodiments.

It should be understood that the communication apparatus 1500 may be specifically the network device or the terminal device in the foregoing embodiments, or may be a chip or a chip system. Correspondingly, the transceiver 1520 may be a transceiver circuit of the chip. This is not limited herein. Specifically, the communication apparatus 1500 may be configured to perform the steps and/or procedures corresponding to the network device or the terminal device in the foregoing method embodiments. Optionally, the memory 1530 may include a read-only memory and a random access memory, and provide the instructions and data for the processor. Apart of the memory may further include a non-volatile random access memory. For example, the memory may further store information of a device type. The processor 1510 may be configured to execute the instructions stored in the memory. In addition, when the processor 1510 executes the instructions stored in the memory, the processor 1510 is configured to perform the steps and/or procedures in the foregoing method embodiments corresponding to the network device or the terminal device.

In an implementation process, the steps in the foregoing methods can be completed by using an integrated logic circuit of hardware in the processor, or by using instructions in a form of software. The steps of the methods disclosed with reference to embodiments of this application may be directly performed and completed by using a hardware processor, or may be performed and completed by using a combination of the hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor. To avoid repetition, details are not described herein again.

It should be noted that, the processor in embodiments of this application may be an integrated circuit chip, and has a signal processing capability. In an implementation process, the steps in the foregoing method embodiments can be completed by using an integrated logic circuit of hardware in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by using a hardware decoding processor, or may be performed and completed by using a combination of hardware in a decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware in the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the methods in this specification aims to include, but not limited to, these and any memory of another appropriate type.

According to the methods provided in embodiments of this application, this application further provides a computer program product. The computer program product includes computer program code. When the computer program code is run on a computer, the computer is enabled to perform the steps or procedures performed by the network device or the terminal device in the foregoing method embodiments.

According to the methods provided in embodiments of this application, this application further provides a computer-readable storage medium. The computer-readable storage medium stores program code. When the program code is run on a computer, the computer is enabled to perform the steps or procedures performed by the terminal device or the network device in the foregoing method embodiments.

According to the methods provided in embodiments of this application, this application further provides a communication system, including the foregoing one or more terminal devices and one or more network devices.

The foregoing apparatus embodiments completely correspond to the method embodiments. A corresponding module or unit performs a corresponding step. For example, a communication unit (a transceiver) performs a receiving or sending step in the method embodiments, and a processing unit (a processor) performs a step other than the sending or receiving step. A function of a specific unit may be based on a corresponding method embodiment. There may be one or more processors.

In this application, "indication" may include a direct indication and an indirect indication, or may include an explicit indication and an implicit indication. Information indicated by using a piece of information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

In embodiments of this application, the terms and English abbreviations are all examples given for ease of description, and should not constitute any limitation on this application. This application does not exclude a possibility of defining another term that can implement a same or similar function in an existing protocol or a future protocol.

It should be understood that "and/or" in this specification describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

A person of ordinary skill in the art may be aware that various illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed system, apparatuses, and methods may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the functions, all or some of the functions may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the functions are implemented in a form of a software functional unit and sold or used as an independent product, the functions may be stored in a computer-readable storage medium. Based on such an understanding, the technical solutions in this application essentially, the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A small data transmission method, wherein the method is applicable to a terminal device, and comprises:
when the terminal device is in a radio resource control RRC non-connected state, determining, based on first duration and a first moment at which first small data needs to be transmitted, whether a target resource for transmitting the first small data is a first configured grant or a first random access resource; and
transmitting the first small data to a network device based on the target resource.

2. The method according to claim 1, wherein the determining, based on first duration and a first moment at which first small data needs to be transmitted, whether a target resource for transmitting the first small data is a first configured grant or a first random access resource comprises:
determining, depending on whether a first time period overlaps the first moment, whether the target resource for transmitting the first small data is the first configured grant or the first random access resource, wherein
a start point of the first time period is a start moment of any configured grant in the first configured grant, and duration of the first time period is the first duration.

3. The method according to claim 2, wherein the determining, depending on whether a first time period overlaps the first moment, whether the target resource for transmitting the first small data is the first configured grant or the first random access resource comprises:
if the first time period does not overlap the first moment, determining, by the terminal device, that the target resource for transmitting the first small data is the first configured grant; or
if the first time period overlaps the first moment, determining, by the terminal device, that the target resource for transmitting the first small data is the first random access resource.

4. The method according to claim 1, wherein the determining, based on first duration and a first moment at which first small data needs to be transmitted, whether a target resource for transmitting the first small data is a first configured grant or a first random access resource comprises:
determining, depending on whether there is a configured grant in a second time period, whether the target resource for transmitting the first small data is the first configured grant or the first random access resource, wherein
a start point of the second time period is the first moment, and duration of the second time period is the first duration.

5. The method according to claim 4, wherein the determining, depending on whether there is a configured grant in a second time period, whether the target resource for transmitting the first small data is the first configured grant or the first random access resource comprises:
if there is a configured grant in the second time period, determining that the target resource for transmitting the first small data is the first configured grant; or
if there is no configured grant in the second time period, determining that the target resource for transmitting the first small data is the first random access resource.

6. The method according to any one of claims 1 to 5, wherein the method further comprises:
determining a first parameter, wherein the first parameter indicates whether to allow using a random access process to transmit small data; and
the determining, based on first duration and a first moment at which first small data needs to be transmitted, whether a target resource for transmitting the first small data is a first configured grant or a first random access resource comprises:
determining, based on the first duration, the first parameter, and the first moment at which the first small data needs to be transmitted, whether the target resource for transmitting the first small data is the first configured grant or the first random access resource.

7. The method according to claim 6, wherein the determining, based on the first duration, the first parameter, and the first moment at which the first small data needs to be transmitted, whether the target resource for transmitting the first small data is the first configured grant or the first random access resource comprises:
determining, depending on whether the first time period overlaps the first moment and based on the first parameter, whether the target resource for transmitting the first small data is the first configured grant or the first random access resource, wherein
the start point of the first time period is the start moment of the any configured grant in the first configured grant, and the duration of the first time period is the first duration.

8. The method according to claim 7, wherein the determining, depending on whether the first time period overlaps the first moment and based on the first parameter, whether the target resource for transmitting the first small data is the first configured grant or the first random access resource comprises:
if the first time period does not overlap the first moment, and the first parameter indicates not to allow using the random access process to transmit the small data, determining that the target resource for transmitting the first small data is the first configured grant; or
if the first time period overlaps the first moment, and the first parameter indicates to allow using the random access process to transmit the small data, determining that the target resource for transmitting the first small data is the first random access resource.

9. The method according to claim 6, wherein the determining, based on the first duration, the first parameter, and the first moment at which the first small data needs to be transmitted, whether the target resource for transmitting the first small data is the first configured grant or the first random access resource comprises:
determining, depending on whether there is a configured grant in the second time period and based on the first parameter, whether the target resource for transmitting the first small data is the first configured grant or the first random access resource, wherein
the start point of the second time period is the first moment, and the duration of the second time period is the first duration.

10. The method according to claim 9, wherein the determining, depending on whether there is a configured grant in the second time period and based on the first parameter, whether the target resource for transmitting the first small data is the first configured grant or the first random access resource comprises:
if there is a configured grant in the second time period, and the first parameter indicates not to allow using the random access process to transmit the small data, determining that the target resource for transmitting the first small data is the first configured grant; or
if there is no configured grant in the second time period, and the first parameter indicates to allow using the random access process to transmit the small data, determining that the target resource for transmitting the first small data is the first random access resource.

11. The method according to any one of claims 1 to 10, wherein if the target resource is the first configured grant, the transmitting the first small data to a network device based on the target resource comprises:
determining a next configured grant to a current moment, wherein the first configured grant comprises the next configured grant; and
transmitting the first small data to the network device on the next configured grant to the current moment.

12. The method according to any one of claims 1 to 11, wherein the method further comprises:
receiving first indication information sent by the network device, wherein the first indication information indicates the first duration and/or the first parameter, and the first parameter indicates whether to allow using the random access process to transmit the small data.

13. The method according to claim 12, wherein the receiving first indication information sent by the network device comprises:
receiving, in an RRC connected state, an RRC reconfiguration message sent by the network device, wherein the RRC reconfiguration message comprises the first indication information.

14. The method according to claim 12, wherein the receiving first indication information sent by the network device comprises:
receiving an RRC release message sent by the network device, wherein the RRC release message comprises the first indication information, and the terminal device enters the RRC non-connected state after receiving the RRC release message.

15. The method according to any one of claims 12 to 14, wherein the first indication information specifically indicates that the first duration and/or the first parameter correspond/corresponds to a first logical channel; the first indication information specifically indicates that the first duration and/or the first parameter correspond/corresponds to a first service; or the first duration is related to a delay requirement of the first small data.

16. A small data transmission method, wherein the method is applied to a network device, and comprises:
sending first indication information to a terminal device, wherein the first indication information indicates first duration; and
receiving first small data sent by the terminal device in a radio resource control RRC non-connected state based on a target resource, wherein the target resource is determined based on the first duration.

17. The method according to claim 16, wherein the target resource is a first configured grant or a first random access resource, and the first configured grant or the first random access resource is determined based on the first duration.

18. The method according to claim 16 or 17, wherein the first indication information further indicates a first parameter, the first parameter indicates whether to allow using a random access process to transmit small data, and the target resource is determined based on the first duration and the first parameter.

19. The method according to any one of claims 16 to 18, wherein the sending first indication information to a terminal device comprises:
sending an RRC reconfiguration message to the terminal device in an RRC connected state, wherein the RRC reconfiguration message comprises the first indication information.

20. The method according to any one of claims 16 to 18, wherein the sending first indication information to a terminal device comprises:
sending an RRC release message to the terminal device, wherein the RRC release message comprises the first indication information, and the RRC release message indicates the terminal device to enter the RRC non-connected state.

21. The method according to any one of claims 16 to 20, wherein the first indication information specifically indicates that the first duration and/or the first parameter correspond/corresponds to a first logical channel; the first indication information specifically indicates that the first duration and/or the first parameter correspond/corresponds to a first service; or the first duration is related to a delay requirement of the first small data.

22. A terminal device, comprising a processor, wherein the processor is configured to perform the method according to any one of claims 1 to 15.

23. A network device, comprising a processor, wherein the processor is configured to perform the method according to any one of claims 16 to 21.

24. A communication apparatus, comprising a processor and a memory, wherein the processor is coupled to the memory, the memory is configured to store a computer program or instructions, and the processor is configured to execute the computer program or the instructions in the memory, to enable the method according to any one of claims 1 to 15 to be performed.

25. A communication apparatus, comprising a processor, wherein the processor is coupled to a memory, the memory is configured to store a computer program or instructions, and the processor is configured to execute the computer program or the instructions in the memory, to enable the method according to any one of claims 16 to 21 to be performed.

26. A computer-readable storage medium, wherein the computer-readable storage medium stores a program or instructions for implementing the method according to any one of claims 1 to 15.

27. A computer-readable storage medium, wherein the computer-readable storage medium stores a program or instructions for implementing the method according to any one of claims 16 to 21.
